(19) Europäisches Patentamt
European Patent Office
Office européen des brevets

(11) **EP 4 657 953 A1**

(12) **EUROPEAN PATENT APPLICATION**
published in accordance with Art. 153(4) EPC

(43) Date of publication:
**03.12.2025 Bulletin 2025/49**

(21) Application number: **23918395.7**

(22) Date of filing: **26.01.2023**

(51) International Patent Classification (IPC):
**H04W 72/21** *(2023.01)*    **H04W 72/54** *(2023.01)*

(52) Cooperative Patent Classification (CPC):
**H04W 72/21; H04W 72/54**

(86) International application number:
**PCT/JP2023/002536**

(87) International publication number:
**WO 2024/157431 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **TAKAHASHI, Yuki**
**Tokyo 100-6150 (JP)**

• **NAGATA, Satoshi**
**Tokyo 100-6150 (JP)**
• **PI, Qiping**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND WIRELESS COMMUNICATION SYSTEM**

(57)    A terminal comprising: a control unit which determines uplink control information on the basis of the presence or absence of support for transmission of first information that specifies the occasion of an unused uplink signal, the support being defined according to the fact of being a licensed spectrum or the fact that a specific control parameter has not been set; and a transmission unit which transmits the uplink control information.

20

FIG. 11

EP 4 657 953 A1

## Description

Technical Field

The present disclosure relates to a terminal, a radio communication method, and a radio communication system.

Background Art

Long Term Evolution (LTE) has been specified for achieving a higher data rate, lower latency, and the like in a Universal Mobile Telecommunication System (UMTS) network. For a wider bandwidth and higher speed than LTE, a successor system to LTE has also been studied. Examples of the successor systems to LTE include systems called LTE-Advanced (LTE-A), Future Radio Access (FRA), 5th generation mobile communication system (5G), 5G plus (5G+), Radio Access Technology (New-RAT), New Radio (NR), and the like.

In 5G, various radio technologies and network architectures have been studied to satisfy the requirement of reducing the latency in the radio section to 1 ms or less while achieving the throughput equal to or greater than 10 Gbps (e.g., Non-Patent Literature (hereinafter, referred to as "NPL") 1).

In NR, the configuration of a Configured Grant Physical Uplink Shared Channel (CG PUSCH) is specified in Release 16 (e.g., NPL 2). The CG PUSCH includes Type 1 CG PUSCH and Type 2 CG PUSCH.

In Release 17, studies have been made for Extended Reality (XR) such as Virtual Reality (VR) and Mixed Reality (MX), and the XR scenarios, requirements, Key Performance Indicators (KPI), and evaluation methods for XR have been discussed. The target requirement for XR is to consider aspects of capacity, latency (delay), mobility, and energy efficiency.

Additionally, at the RAN1 #111 meeting, it was agreed to support CG enhancement (extension) for XR in Release 18. Specifically, dynamic indication of one or more unused CG PUSCH occasions by a terminal based on Uplink Control Information (UCI) (e.g., CG-UCI or new UCI) has been studied.

Citation List

Non-Patent Literature

NPL 1
TS38.213 V16.3.0 (2020-09)
NPL 2
TS38.331 V16.2.0 (2020-09)

Summary of Invention

There is room for study on a method for indicating an unused CG PUSCH occasion.

An aspect of the present disclosure is to provide a terminal, a radio communication method, and a radio communication system each capable of appropriately reporting a dynamic indication of an unused CG PUSCH occasion to a base station.

Solution to Problem

A terminal according to one aspect of the present disclosure includes: a control section that determines uplink control information based on presence or absence of support for transmission of first information indicating an unused uplink signal occasion, the presence or absence of the support being specified according to whether an operating frequency band is a licensed spectrum or whether a specific control parameter is not configured; and a transmission section that transmits the uplink control information.

Brief Description of Drawings

FIG. 1 illustrates an example of dual connectivity (DC);
FIG. 2 illustrates an example of PUCCH carrier switching;
FIG. 3 is a diagram illustrating an outline of a Type 1 HARQ-ACK CB;

FIG. 4 is a diagram illustrating an outline of a Type 2 HARQ-ACK CB;

FIG. 5 is a diagram illustrating an example of the generation of the Type 1 HARQ-ACK CB;

FIG. 6 is another diagram illustrating the example of the generation of the Type 1 HARQ-ACK CB;

FIG. 7 is still another diagram illustrating the example of the generation of the Type 1 HARQ-ACK CB;

FIG. 8 is a diagram illustrating exemplary determination of a candidate PDSCH reception occasion in Step A-2;

FIG. 9 is a diagram illustrating an example of a CG PUSCH;

FIG. 10 is a block diagram illustrating an exemplary configuration of a base station according to the present embodiment;

FIG. 11 is a block diagram illustrating an exemplary configuration of a terminal according to the present embodiment;

FIG. 12 is a diagram illustrating an exemplary hardware structure of the base station and the terminal according to an embodiment of the present disclosure; and

FIG. 13 is a diagram illustrating an exemplary configuration of a vehicle according to an embodiment of the present invention.

Description of Embodiments

Hereinafter, an embodiment according to an aspect of the present disclosure will be described with reference to the drawings.

In NR, various technologies for methods called Ultra-Reliable and Low Latency Communications (URLLC) and Industrial Internet of Things (IIoT) have been studied in Release 17. In URLLC, the enhancement of the feedback function of a terminal for Hybrid Automatic Repeat request-Acknowledgement (HARQ-ACK) has been studied. The HARQ-ACK is an example of information on a confirmation response (e.g., acknowledgement) to data received by a terminal. For these study matters of URLLC, supporting dynamic and semi-static PUCCH carrier switching was agreed. Note that, the PUCCH carrier switching may be referred to by another name such as carrier switching for control information transmission.

The PUCCH carrier switching is a technique applied when a base station performs communication via a plurality of cells. Hereinafter, dual connectivity and PUCCH carrier switching, which are examples of communication via a plurality of cells, will be described.

<Dual Connectivity>

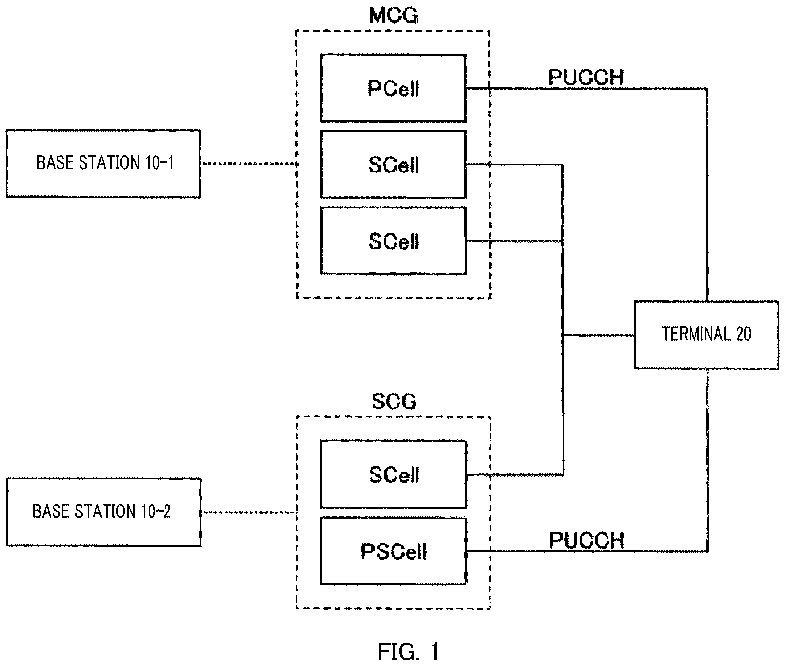

FIG. 1 illustrates an example of dual connectivity (DC). In the example of FIG. 1, base station 10-1 may be a Master Node (MN), and base station 10-2 may be a Secondary Node (SN). In DC, carriers between different base stations are bundled together as illustrated in the example of FIG. 1.

In the example of FIG. 1, base station 10-1 communicates with terminal 20 via a primary cell (Pcell) and secondary cells (Scells). In the example of FIG. 1, terminal 20 establishes an RRC connection with base station 10-1.

In DC, a delay in communication may occur between base stations 10-1 and 10-2, and thus it is difficult to indicate uplink control information (e.g., Uplink Control Information (UCI)) received in the Pcell of base station 10-1 to base station 10-2 via a backhaul link (e.g., wired or wireless link connecting base stations 10-1 and 10-2) to reflect the UCI in scheduling of an Scell under base station 10-2. Then, in DC, in addition to the Pcell of base station 10-1, one carrier under base station 10-2 may be configured as a Primary Scell (PScell), and PUCCH transmission may be supported by the PScell. In this case, terminal 20 transmits UCI to base station 10-2 via the PScell.

In the example of FIG. 1, terminal 20 configures Scells in addition to the Pcell for base station 10-1. Furthermore, terminal 20 configures an Scell in addition to the PScell for base station 10-2. Terminal 20 transmits UCI for each carrier under base station 10-1 via a PUCCH in the Pcell. Furthermore, terminal 20 transmits UCI for each carrier under base station 10-2 via a PUCCH in the PScell. In the example of FIG. 1, a cell group (CG) under base station 10-1 may be referred to as a Master Cell-Group (MCG), and a cell group under base station 10-2 may be referred to as a Secondary Cell-Group (SCG).

When DC is performed, terminal 20 may transmit a PUCCH via a Pcell, PScell, and/or PUCCH-Scell. Generally, terminal 20 is not assumed to transmit a PUCCH via an Scell other than the Pcell, PScell, and PUCCH-Scell.

<PUCCH Carrier Switching>

PUCCH carrier switching has been studied as a method for reducing latency in HARQ-ACK feedback in a Time Division Duplex (TDD) scheme.

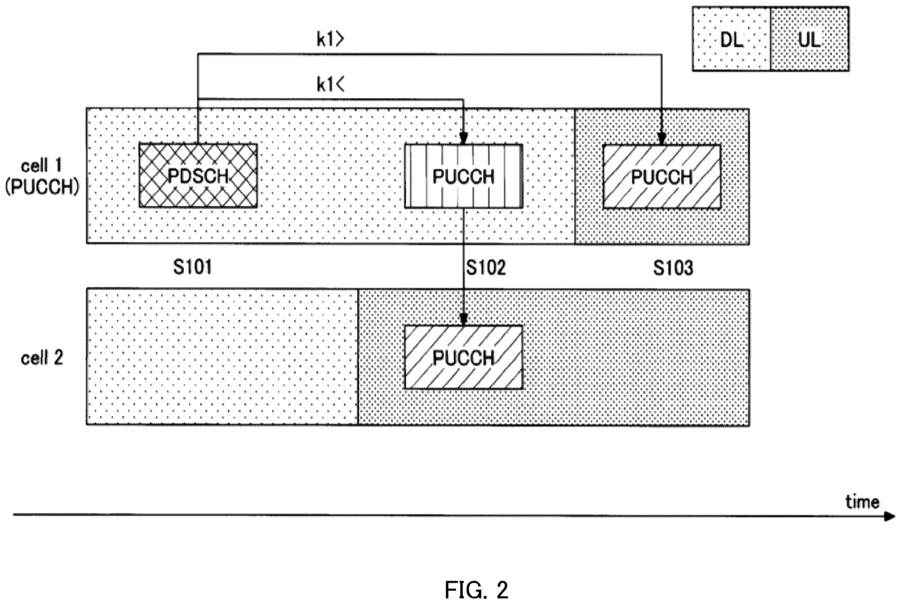

FIG. 2 illustrates an example of PUCCH carrier switching. In the example of FIG. 2, a base station and a terminal communicate with each other via cell 1 and cell 2. In the example of FIG. 2, cell 1 is a Pcell and cell 2 is an Scell. Furthermore, in the example of FIG. 2, a downlink (DL) slot and an uplink (UL) slot in each cell are illustrated.

In the example of FIG. 2, the terminal receives data (receives a Physical Downlink shared Channel (PDSCH)) at a timing of S101. The terminal attempts to transmit an HARQ-ACK for the data received at S101 at a timing of S102, but the slot in cell 1 at the timing of S102 is a downlink (DL) slot. Thus, in a case where the terminal transmits an HARQ-ACK in cell 1, the terminal holds the HARQ-ACK transmission until a PUCCH transmission timing in an uplink (UL) slot (e.g., timing of S103 in FIG. 2), so that latency in HARQ-ACK transmission increases. Note that a PUCCH transmission timing in an uplink (UL) slot may be referred to as a PUCCH transmission occasion.

In the example of FIG. 2, the slot in cell 2 at the timing of S102 is a UL slot. In the example of FIG. 2, the latency in HARQ-ACK transmission can be reduced if the terminal can transmit the HARQ-ACK for the data received at S101 in the PUCCH transmission occasion at the timing of S102 in cell 2. In URLLC, low latency in a radio section is especially required. Thus, in 3GPP (registered trademark), PUCCH carrier switching in which a terminal switches carriers for transmitting PUCCH has been studied as an extension of URLLC technology.

Note that, in the following embodiment, "the same timing" may be completely the same timing or may refer to that all or some of time resources (e.g., one or a plurality of symbol(s) (which may also be resources in time units shorter than a symbol) are the same or overlap.

PUCCH carrier switching may also refer to that, in a case where a terminal attempts to perform PUCCH transmission at a specific transmission timing in a Pcell (which may be PScell or PUCCH-Scell), since the slot in the Pcell (which may be PScell or PUCCH-Scell) at the specific transmission timing is a DL slot, the terminal switches the cell for performing PUCCH transmission from the Pcell (which may be PScell or PUCCH-Scell) to an Scell (which is Scell other than PScell in the case of PScell, and is Scell other than PUCCH-Scell in the case of PUCCH-Scell) of one or a plurality of Scell(s) in which a slot at the same timing as the specific transmission timing is a UL slot. Note that, in an embodiment of the present invention, the unit of the specific transmission timing is not limited to a slot. For example, the specific transmission timing may be a timing in units of subframes or in units of symbols.

Two methods have been studied for achieving PUCCH carrier switching. The first method is a method in which a base station dynamically indicates a carrier for performing PUCCH transmission to a terminal. The second method is a method in which a base station semi-statically configures a carrier for performing PUCCH transmission for a terminal. Note that, in the example described below, "PUCCH transmission" and "transmitting PUCCH" may refer to transmission of uplink control information via a PUCCH.

A terminal may indicate, to a base station, terminal capability information (UE capability) that specifies information on capability of the terminal related to PUCCH transmission.

For example, as the UE capability of a terminal, information indicating whether the terminal supports switching between configurations related to transmission of control information may be specified. Switching between configurations related to transmission of control information may be, for example, switching between resources (e.g., carriers or cells) to be used for transmitting control information. Switching between resources to be used for transmitting control information may also be referred to as "PUCCH carrier switching." Furthermore, as the UE capability of a terminal, information indicating application of dynamic PUCCH carrier switching and/or semi-static PUCCH carrier switching may be specified.

The configuration operation of the semi-static PUCCH carrier switching may be based on the Radio Resource Control (RRC) configuring a PUCCH cell timing pattern for the PUCCH cell to which the semi-static PUCCH carrier switching is applied. Further, the configuration operation of the semi-static PUCCH carrier switching may be supported between cells with different numerologies.

In the PUCCH carrier switching, PUCCH resources may be configured per Uplink Bandwidth Part (UL BWP) (e.g., per candidate cell and per UL BWP of a candidate cell).

In the case of PUCCH carrier switching based on dynamic indication of control information, a K1 value (offset) from a PDSCH to an HARQ-ACK may be interpreted based on the numerology of a target PUCCH cell to be dynamically indicated. Note that the control information may be control information for scheduling a PUCCH, such as Downlink Control Information (DCI). Furthermore, the numerology may be regarded as a slot or a Subcarrier Spacing (SCS).

In URLLC, enhancement of HARQ-ACK Codebook (HARQ-ACK CB) feedback by a terminal has been studied. The following are overviews of Type 1 HARQ-ACK CB and Type 2 HARQ-ACK CB (for details, see NPL 1).

Note that the Type 1 HARQ-ACK CB may be referred to as a semi-static HARQ-ACK CB. The Type 2 HARQ-ACK CB may be referred to as a dynamic HARQ-ACK CB. The terminal may be indicated as to which of the Type 1 HARQ-ACK CB or the Type 2 HARQ-ACK CB is applied, for example, by higher layer signaling such as radio resource control (RRC).

<Type 1 HARQ-ACK CB>

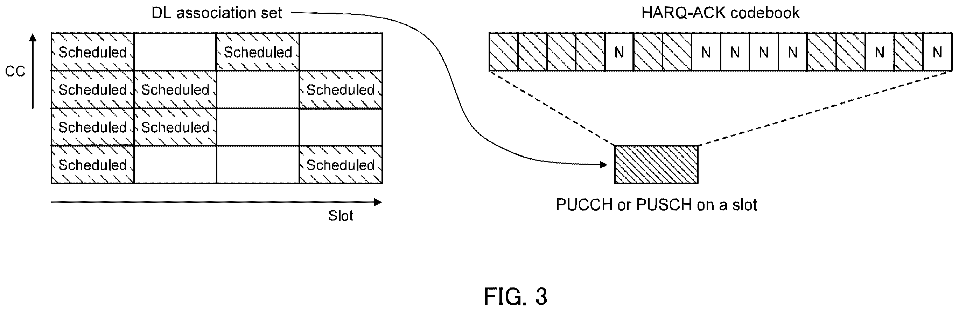

FIG. 3 is a diagram illustrating an outline of the Type 1 HARQ-ACK CB. The terms "scheduled" illustrated in FIG. 3 each represent, for example, a slot scheduled by DCI. The term CC represents a Component Carrier.

In the Type 1 HARQ-ACK CB, the terminal generates HARQ-ACK bits for PDSCH regardless of whether a scheduled slot (PDSCH) is present. For example, as illustrated in the "HARQ-ACK codebook" in FIG. 3, the terminal may configure NACKS for unscheduled PDSCHs.

**<Type 2 HARQ-ACK CB>**

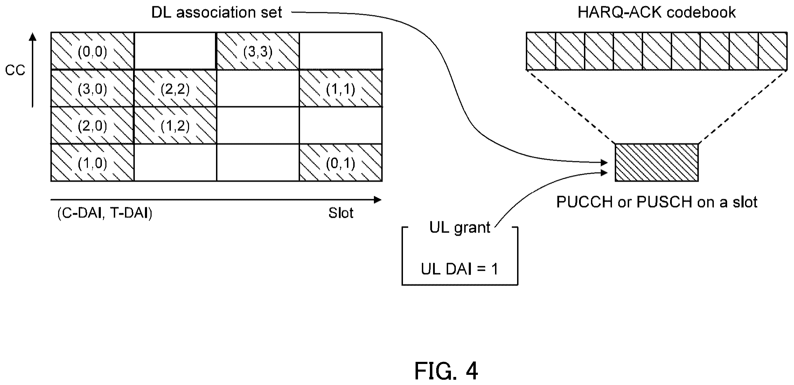

FIG. 4 is a diagram illustrating an outline of the Type 2 HARQ-ACK CB. The (x, y) illustrated in FIG. 4 represents, for example, a slot scheduled by DCI. The x corresponds to a C-DAI value and the y corresponds to a T-DAI value. The DAI is an abbreviation for a Downlink assignment index. The DAI represents, for example, assignment of a scheduled PDSCH for which an HARQ-ACK is bundled to an HARQ-ACK CB.

In the Type-2 HARQ-ACK CB, the terminal generates HARQ-ACK bits for scheduled PDSCHs. For example, the terminal may configure HARQ-ACKs for scheduled PDSCHs as illustrated in the "HARQ-ACK codebook" in FIG. 4.

Note that, the C-DAI is counted up from one. For example, in the case of a twobit field, the C-DAI is repeated as in 1->2->3->0-> and so forth. The C-DAI is counted up per slot and per DCI reception occasion of each CC, and is counted up from the final value of the previous slot even as the slot changes. The T-DAI represents the final C-DAI value of each slot.

Next, an example of the generation of Type 1 HARQ-ACK CB is described.

**<Generation of Type-1 HARQ-ACK CB>**

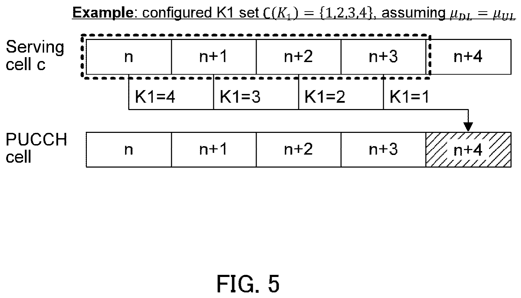

FIGS. 5, 6, and 7 are diagrams for describing an example of the generation of Type-1 HARQ-ACK CB. In FIG. 5, it is assumed that the numerology of a serving cell and the numerology of a PUCCH cell are the same. In FIG. 5, a K1 (offset from PDSCH to HARQ-ACK) set is {1, 2, 3, 4}.

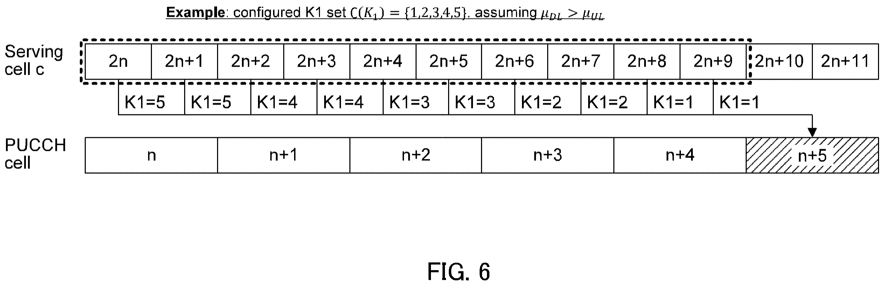

In FIG. 6, it is assumed that the numerology of a serving cell is different from the numerology of a PUCCH cell. In FIG. 6, the K1 set is {1, 2, 3, 4, 5}.

The terminal may generate a HARQ-ACK CB based on the following Step A, Step A-1, Step A-2, and Step B.

- Step A

The terminal determines an HARQ-ACK occasion for candidate PDSCH receptions. For example, in FIG. 5, the terminal determines the slot of n+4 in the PUCCH cell. For example, in FIG. 6, the terminal determines the slot of n+5 in the PUCCH cell.

- Step A-1

The terminal determines a PDSCH slot window based on the K1 set. For example, the terminal interprets the K1 set in the numerology of the PUCCH cell and determines the PDSCH slot window, as shown in the dotted frame in FIG. 5 or FIG. 6.

- Step A-2

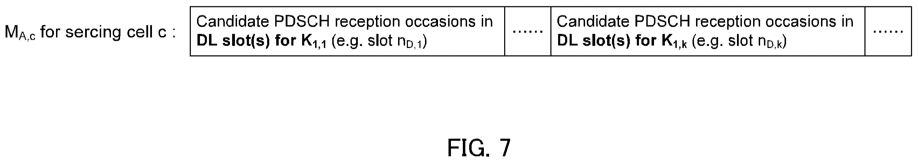

The terminal determines candidate PDSCH reception occasions in each slot for each K1. For example, as illustrated in $M_{A,c}$ in FIG. 7, the terminal determines candidate PDSCH reception occasions in each slot.

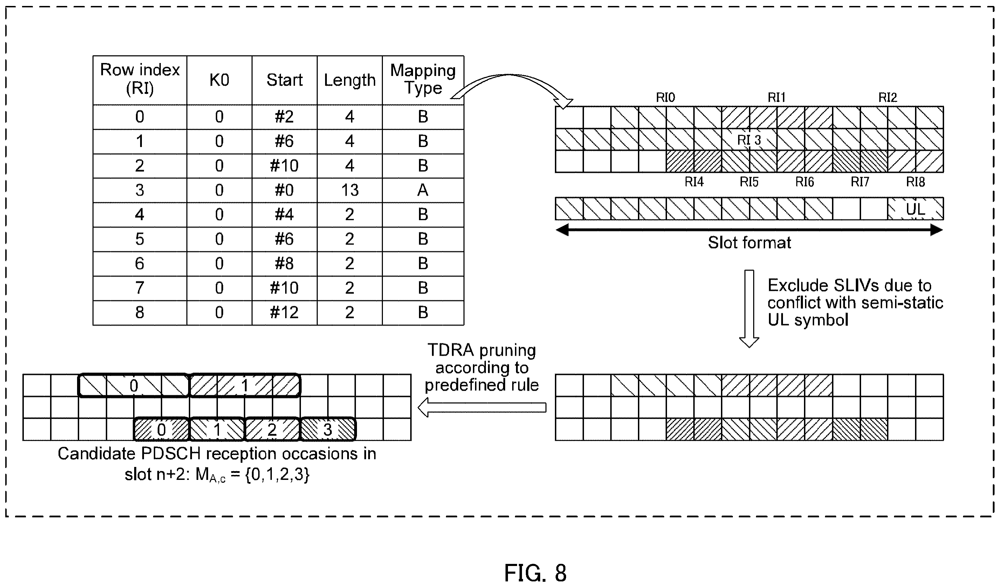

Note that the candidate PDSCH reception occasions, which will be described in FIG. 8, are associated with a set Row index (RI) of a Time Domain Resource Allocation (TDRA) table. The candidate PDSCH reception occasion in the TDRA table overlapping with UL configured by TDD-UL-DL-ConfigurationCommon and TDD-UL-DL-ConfigDedicated is excluded. Regarding the candidate PDSCH reception occasions overlapping in the time domain, the candidate PDSCH reception occasion is determined based on a specific rule.

- Step B

The terminal may determine (generate) an HARQ-ACK (HARQ-ACK information bits, HARQ-ACK CB) for each element of a determined candidate PDSCH reception occasion. For example, the terminal may generate the following Type-1 HARQ-ACK CB for the total number $O^{ACK}$ of HARQ-ACK information bits.

[1]

$$\tilde{O}_0^{ACK}, \tilde{O}_1^{ACK}, ..., \tilde{O}_{O^{ACK}-1}^{ACK} \quad \ldots \text{(Expression 1)}$$

FIG. 8 is a diagram illustrating exemplary determination of candidate PDSCH reception occasions in Step A-2. The table shown in the upper left of FIG. 8 is an example of TDRA. The column of "K0" indicates an offset between the slot of DCI and the slot of PDSCH. The column of "Start" indicates the starting symbol within a slot, and the column of "Length" indicates the length from the "Start" (the number of symbols allocated to PDSCH). The column of "Mapping Type" is related to a mapping type that includes information on a symbol configurable as a starting symbol of PDSCH within a slot.

A slot format is illustrated in the upper right of FIG. 8. In the example of the slot format illustrated in FIG. 8, the last two symbols are semi-statically configured as UL.

Candidate PDSCH reception occasions based on TDRA RIs 0 to 8 illustrated in the upper left of FIG. 8 are as shown in the upper right of FIG. 8. However, candidate PDSCH reception occasions in the TDRA table overlapping with the UL are excluded.

Thus, the candidate PDSCH reception occasions for RI 2, RI 3, and RI 8 that overlap with the UL are excluded, and the candidate PDSCH reception occasions in a certain slot are as shown in the lower right of FIG. 8. That is, HARQ-ACKs for RI 2, RI 3, and RI 8 are excluded from the HARQ-ACK CB generation set.

For the candidate PDSCH reception occasions that overlap in the time domain, candidate PDSCH reception occasions are determined based on a specific rule. Therefore, the final candidate PDSCH reception occasions are as shown in the lower left of FIG. 8, and $M_{A,c}$ in a certain slot is $M_{A,c}$ = {0, 1, 2, 3}.

<CG PUSCH>

As described above, in NR, the configuration of CG PUSCH is specified in Rel-16 (e.g., NPL 2). The CG PUSCH includes Type 1 CG PUSCH and Type 2 CG PUSCH.

- Type 1 CG PUSCH

Transmission parameters for Type 1 CG PUSCH are provided by "configuredGrantConfig," "pusch-Config," and "rrc-ConfiguredUplinkGrant." The activation/deactivation of Type 1 CG PUSCH depends on an RRC-configuration and does not depend on Downlink Control Information (DCI).

- Type 2 CG PUSCH

Transmission parameters for Type 2 CG PUSCH are provided by "configuredGrantConfig," "pusch-Config," and "activation DCI." The activation/deactivation of Type 2 CG PUSCH depends on an RRC-configuration and DCI. One DCI can activate one CG PUSCH and can deactivate a plurality of CG PUSCHs.

As mentioned above, XR has been studied in Release 17, and the target requirements for XR is to consider aspects of capacity, latency, mobility, and energy efficiency. Therefore, it is assumed that CG PUSCH is applied to XR services, and multiple CGs are used for an XR packet transmission.

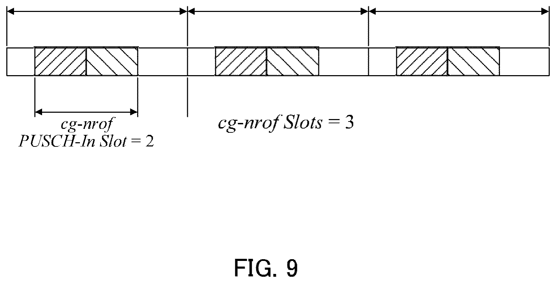

FIG. 9 is a diagram illustrating an example of the CG PUSCH. The terminal is provided with cg-nrofSlots and cg-nrofPUSCH-InSlot which are higher layer parameters. The cg-nrofSlots indicates the number of consecutive slots allocated in a configured CG periodicity. The cg-nrofPUSCH-InSlot indicates the number of consecutive PUSCH allocations in a slot. FIG. 9 illustrates an example in which cg-nrofSlots = 3 and cg-nrofSlots = 2. A period of the CG PUSCH configuration (a period in which CG PUSCHs are transmitted, e.g., three slots illustrated in FIG. 9) is repeated with the configured CG periodicity.

The first PUSCH allocation is based on the TDRA of Type 1 CG PUSCH or a higher layer configuration based on TS38.321. Alternatively, the first PUSCH allocation is based on a UL grant received in DCI for Type 2 CG PUSCH. The remaining PUSCH allocations have the same length and mapping type as the first PUSCH. Each PUSCH is added immediately after the previous PUSCH without gaps.

<CG-UCI for Unlicensed Spectrum>

In the current specification, regarding transmission of CG-UCI on a CG PUSCH, the technical specification (TS) 38.212 specifies that CG-UCI is transmitted on a CG PUSCH when "cg-RetransmissionTimer," which is a higher layer parameter, is configured. The cg-RetransmissionTimer is herein an example of a specific parameter. The cg-RetransmissionTimer indicates information related to a configured retransmission timer. The cg-RetransmissionTimer is configured together with "harq-ProcID-Offset," which is a higher layer parameter. The cg-RetransmissionTimer is not configured for operation in a licensed spectrum, or is not configured simultaneously with "harq-ProcID-Offset2," which is a higher layer parameter. Note that the licensed spectrum corresponds to a band for which a license is required for use. Meanwhile, an unlicensed spectrum corresponds to a band for which a license is not required for use.

In other words, the fact that cg-RetransmissionTimer is not configured may correspond to the fact that the operation of the terminal is performed in a licensed spectrum. In other words, the fact that cg-RetransmissionTimer is configured may correspond to the fact that the operation of the terminal is not performed in a licensed spectrum. The fact that the operation of the terminal is not performed in a licensed spectrum may correspond to the fact that the operation of the terminal is performed in an unlicensed spectrum.

Because cg-RetransmissionTimer is configured together with harq-ProcID-Offset, the fact that cg-RetransmissionTimer is configured may correspond to the fact that harq-ProcID-Offset is configured. Because cg-RetransmissionTimer is not configured simultaneously with harq-ProcID-Offset2, the fact that cg-RetransmissionTimer is configured may correspond to the fact that harq-ProcID-Offset2 is not configured, and the fact that cg-RetransmissionTimer is not configured may correspond to the fact that harq-ProcID-Offset2 is configured.

<Multiplexing of UCI in PUSCH>

For UCI reported on a PUSCH by a terminal, an offset value for determining the number of resources for multiplexing HARQ-ACK information on the PUSCH and an offset value for determining the number of resources for multiplexing channel state information (CSI) reports on the PUSCH are defined.

It is assumed that the CSI report is divided into two parts. Hereinafter, the two parts of the CSI report are sometimes referred to as a part 1 CSI report and a part 2 CSI report. Alternatively, the two parts of the CSI report are sometimes referred to as a CSI part 1 and a CSI part 2. The HARQ-ACK information is sometimes simply referred to as a HARQ-ACK. The HARQ ACK, the CSI part 1, and the CSI part 2 are sometimes referred to as HARQ-ACK bits, CSI part 1 bits, and CSI part 2 bits, respectively. Each of the HARQ-ACK bits, the CSI part 1 bits, and the CSI part 2 bits may be one bit of information or may be a plurality of bits of information.

In the current specification, in transmission of CG PUSCH, the multiplexed HARQ-ACK, CSI part 1, and CSI part 2 are individually encoded. In addition, the resource of each of the multiplexed HARQ-ACK, CSI part 1, and CSI part 2 are individually determined.

In the current specification, in the transmission of CG PUSCH, the CG-UCI is encoded together with the HARQ-ACK (e.g., joint encoding). A resource is then determined for the CG-UCI and the HARQ-ACK that are encoded together.

Furthermore, in the current specification, in rate matching, priority is provided for each UCI. For example, in the transmission of the CG PUSCH, among the multiplexed HARQ-ACK, CSI part 1, and CSI part 2, the priority of the HARQ-ACK is higher than the priorities of the CSI part 1 and the CSI part 2, and the priority of the CSI part 1 is higher than the priority of the CSI part 2. In a case where the CG-UCI and the HARQ-ACK are encoded together, the priority of the CG-UCI and HARQ-ACK is higher than the priorities of the CSI part 1 and the CSI part 2.

<Regarding Report of New CG-UCI>

In Release 16, in order to report information on CG PUSCH, CG-UCI is introduced together with the CG PUSCH for an unlicensed spectrum.

In addition, it is studied in the field of XR of Release 18 that a terminal reports a dynamic indication of an unused CG PUSCH occasion by UCI. The UCI in this study may be CG-UCI or may be UCI that is not the CG-UCI (e.g., dedicated UCI). In addition, hereinafter, the unused CG PUSCH occasion may be referred to as an unused CG occasion. The term "unused" may include the meaning of "not used." The "CG PUSCH occasion" may be referred to as a CG PUSCH transmission occasion. The "CG PUSCH configuration" may be referred to as a "CG configuration." The number of unused CG PUSCH occasions to be reported may be one or more.

In addition, it is studied to clarify a relationship between two types of CG-UCI when an unused CG occasion is reported by CG-UCI.

Here, a first type of the two types of CG-UCI is CG-UCI for an HARQ process number (HPN), a redundancy version (RV), a new data indicator (NDI), and channel occupancy time (COT) sharing information in an unlicensed spectrum. The CG-UCI for the HPN, the RV, the NDI, and the COT sharing information is described in section 6.3.2.1.3 of TS 38.212 and may be referred to as a "legacy CG-UCI," or "legacy CG-UCI bits" in the following. The legacy CG-UCI or the legacy CG-UCI bits may be one bit of information or may be a plurality of bits of information. A second type of the two types of CG-UCI is CG-UCI introduced to report an unused CG occasion.

That is, the relationship between the two types of CG-UCI is a relationship between the legacy CG-UCI and the CG-UCI introduced to report an unused CG occasion. For this relationship, for example, a case where indication of an unused CG occasion is performed by the new CG-UCI and a case where indication of an unused CG occasion is performed by the existing CG-UCI are studied.

In the present embodiment, the CG-UCI for reporting the indication of an unused CG occasion (e.g., dynamic indication) is new CG-UCI. Hereinafter, the CG-UCI for reporting the indication of an unused CG occasion (e.g., dynamic indication) is referred to as "new CG-UCI" or "new CG-UCI bits." The new CG-UCI or the new CG-UCI bits may be one bit of information or may be a plurality of bits of information.

In the present embodiment, the new CG-UCI for reporting the indication (e.g., dynamic indication) of the unused CG occasion in a case where an operating frequency band of a radio communication system including a terminal and a base station is a licensed spectrum and in a case where the operating frequency band is an unlicensed spectrum will be described. For example, in the present embodiment, the following study items will be described.

- Study Item 1

For example, there is room for study on presence or absence of support for CG-UCI for reporting the indication (e.g., dynamic indication) of an unused CG occasion in a licensed spectrum. In addition, in a case where the CG-UCI is supported, there is room for study on how to multiplex the new CG-UCI bits on a CG-PUSCH. For example, in a case where the new CG-UCI bits are multiplexed on the CG-PUSCH, a study matter arises on whether to encode the new CG-UCI bits together with the existing UCI (e.g., HARQ-ACK and CSI) or to individually encode the new CG-UCI bits.

- Study Item 2

For example, there is room for study on whether the new CG-UCI bits should have a single part or two parts in a licensed spectrum.

- Study Item 3

For example, there is room for study on presence or absence of support for CG-UCI for reporting the indication (e.g., dynamic indication) of an unused CG occasion in an unlicensed spectrum.

- Study Item 4

For example, in a case where the new CG-UCI bits and the legacy CG-UCI bits are taken into consideration in an unlicensed spectrum, there is room for study on how to multiplex the new CG-UCI bits and the legacy CG-UCI bits.

- Study Item 5

For example, there is room for study on whether the new CG-UCI bits should have a single part or two parts in a licensed spectrum.

For example, in a case where the definitions based on the study items as described above are not sufficient, there is a possibility that a terminal cannot appropriately report the dynamic indication of an unused CG PUSCH occasion to a base station. In a case where the dynamic indication of the unused CG PUSCH occasion cannot be appropriately reported to the base station, the operation of the base station or the terminal is possibly affected, and a problem may also arise in terms of resource utilization efficiency.

For example, in a case where the definitions based on the study items as described above are not sufficient, it is not possible to appropriately perform processing such as presence or absence of support for the dynamic indication of an unused CG PUSCH occasion, and encoding and rate matching in a case where the dynamic indication of the unused CG PUSCH occasion is supported.

Based on the above study items, the following proposals are made in the present embodiment.

Proposals 0 to 2 described below are for a case of a licensed spectrum and correspond to Study Items 1 and 2. Proposals 3 to 5 are for a case of an unlicensed spectrum and correspond to Study Items 3 to 5.

In Proposal 0, support for reporting the indication (e.g., dynamic indication) of an unused CG occasion by CG-UCI in a licensed spectrum is studied. In Proposals 1 and 2, a method is studied for multiplexing new CG-UCI in a CG PUSCH by a terminal in a case where multiplexing of other UCIs than the new CG-UCI in the CG PUSCH is taken into consideration or in a case where the multiplexing is not taken into consideration. In Proposal 1, a case where the new CG-UCI has a single part is studied, and in Proposal 2, a case where the new CG-UCI has two parts is studied.

In Proposal 3, support for reporting the indication (e.g., dynamic indication) of an unused CG occasion by CG-UCI in an unlicensed spectrum is studied. In Proposals 4 and 5, a method is studied for multiplexing new CG-UCI and legacy CG-UCI in a CG PUSCH by a terminal in a case where multiplexing of other UCIs than the new CG-UCI in the CG PUSCH is taken into consideration or in a case where the multiplexing is not taken into consideration . In Proposal 4, a case where the new CG-UCI has a single part is studied, and in Proposal 5, a case where the new CG-UCI has two parts is studied.

<Proposal 0>

In Proposal 0, support for reporting of an unused CG occasion by CG-UCI in a licensed spectrum will be described. The reporting of an unused CG occasion by CG-UCI may be replaced with, for example, reporting of an unused CG occasion using CG-UCI. This reporting may also correspond to reporting of a dynamic indication of an unused CG occasion by CG-UCI.

<Option 1 of Proposal 0>

In Option 1 of Proposal 0, in a licensed spectrum or in a case where cg-RetransmissionTimer is not configured, a terminal is not supported in reporting the dynamic indication of an unused CG occasion by CG-UCI. In other words, in Option 1 of Proposal 0, in a licensed spectrum, a terminal is not supported in reporting the dynamic indication of an unused CG occasion by CG-UCI. Alternatively, in Option 1 of Proposal 0, a terminal is not supported in reporting the dynamic indication of an unused CG occasion by CG-UCI in a case where cg-RetransmissionTimer is not configured.

For example, in a case where cg-RetransmissionTimer is not configured, a terminal need not assume that the terminal is configured to report the dynamic indication of an unused CG occasion by CG-UCI for any CG configuration.

In addition, for example, in a case where cg-RetransmissionTimer is not configured, a terminal does not report the dynamic indication of an unused CG occasion by CG-UCI in any CG-PUSCH.

In Option 1 of Proposal 0, as a variation, a terminal need not be supported in reporting the dynamic indication of an unused CG occasion by CG-UCI in a specific frequency range (e.g., range referred to as frequency range (FR) 1 or FR 2-1) and/or a specific SCS (e.g., any SCS of 15 kHz, 30 kHz, 60 kHz, or 120 kHz). In other words, in this variation, a terminal may be supported in reporting the dynamic indication of an unused CG occasion by CG-UCI in a frequency range other than the specific frequency range and/or an SCS other than the specific SCS.

<Option 2 of Proposal 0>

In Option 2 of Proposal 0, in a licensed spectrum or in a case where cg-RetransmissionTimer is not configured, a terminal is supported in reporting the dynamic indication of an unused CG occasion by CG-UCI. In other words, in Option 2 of Proposal 0, in a licensed spectrum, a terminal is supported in reporting the dynamic indication of an unused CG occasion by CG-UCI. Alternatively, in Option 2 of Proposal 0, in a case where cg-RetransmissionTimer is not configured, a terminal is supported in reporting the dynamic indication of an unused CG occasion by CG-UCI.

For example, in a case where cg-RetransmissionTimer is not configured, a terminal may assume that the terminal is configured to report the dynamic indication of an unused CG occasion by CG-UCI for any CG configuration.

In addition, for example, in a case where cg-RetransmissionTimer is not configured, a terminal may report the dynamic indication of an unused CG occasion by CG-UCI in any CG-PUSCH.

In Option 2 of Proposal 0, as a variation, a terminal may be supported in reporting the dynamic indication of an unused CG occasion by CG-UCI in a specific frequency range (e.g., range referred to as FR 1 or FR 2-1) and/or a specific SCS (e.g., any SCS of 15 kHz, 30 kHz, 60 kHz, or 120 kHz),.

According to Proposal 0, the presence or absence of support for reporting the dynamic indication of an unused CG occasion by CG-UCI is specified according to whether the operating frequency band is a licensed spectrum or whether cg-RetransmissionTimer is not configured. A terminal, for example, determines whether to report the dynamic indication of an unused CG occasion by CG-UCI based on the presence or absence of the support specified according to whether the operating frequency band is a licensed spectrum or whether cg-RetransmissionTimer is not configured, determines UCI according to the determination, and transmits the UCI. This makes it possible to appropriately report the dynamic indication of an unused CG occasion.

<Proposal 1>

In Proposal 1, the following two points are assumed:

- The operating frequency band is a licensed spectrum or cg-RetransmissionTimer is not configured.
- The CG-UCI for an indication of an unused CG PUSCH occasion is single-part CG-UCI.

In the following description, information (e.g., information bits or an information part) of the single-part CG-UCI for the indication of an unused CG PUSCH occasion is referred to as "new CG-UCI bits." However, the "new CG-UCI bits" are not limited to being used for the indication of an unused CG PUSCH occasion in the present disclosure.

A terminal generates new CG-UCI bits for an indication of an unused CG PUSCH occasion. A method for generating the new CG-UCI bits is not particularly limited. For example, the new CG-UCI bits may be generated by any of the methods described below.

<Generation Method 1>

In Generation Method 1, the following options are studied regarding a method for dynamic indication of an unused CG PUSCH occasion by CG-UCI by a terminal.

<Option 1 of Generation Method 1>

In a case where a specific higher layer parameter such as cg-RetransmissionTimer is present, a terminal performs a dynamic indication of an unused CG PUSCH occasion by CG-UCI different from the existing CG-UCI (hereinafter, new CG-UCI). The new CG-UCI may be CG-UCI that can include new CG-UCI bits. In this case, the terminal generates new CG-UCI bits for the indication of an unused CG PUSCH occasion in the new CG-UCI.

In Option 1, in a case where both the new CG-UCI and the existing CG-UCI that share a spectrum are present, the CG PUSCH can include two CG-UCIs.

<Option 2 of Generation Method 1>

In a case where the existing CG-UCI includes a UCI field for indicating an unused CG PUSCH occasion (hereinafter, a new UCI field) in addition to a legacy UCI field, the terminal performs the dynamic indication of an unused CG PUSCH occasion by the existing CG-UCI. Note that the new UCI field may be CG-UCI that can include new CG-UCI bits. In this case, the terminal generates new CG-UCI bits for the indication of the unused CG PUSCH occasion in the new UCI field in the existing CG-UCI.

In Option 2, the terminal transmits a maximum of one CG-UCI together with CG PUSCH.

<Generation Method 2>

Whether the new CG-UCI is present as in Option 1 of Generation Method 1 or whether the new CG-UCI field in the existing CG-UCI is present as in Option 2 may be determined (or judged) as in the following examples.

<Option 1 of Generation Method 2>

In Option 1, whether the new CG-UCI is present or whether the new CG-UCI field is present in the existing CG-UCI is defined by the specification.

<Option 2 of Generation Method 2>

In Option 2, whether the new CG-UCI is present or whether the new CG-UCI field is present in the existing CG-UCI is defined by a configuration of a higher layer (e.g., RRC configuration and/or dynamic indication).

<Generation Method 3>

In Generation Method 3, a specific content of the indication of an unused CG PUSCH occasion by a field of the new CG-UCI or the new field in the existing CG-UCI (hereinafter, referred to as a "CG-UCI field") will be described.

<Option 1 of Generation Method 3>

The CG-UCI field indicates the number of consecutive unused (valid) CG PUSCH occasions (e.g., M consecutive unused (valid) CG PUSCH occasions).

Note that an "invalid CG PUSCH occasion" may include at least one of the following:

- A CG PUSCH occasion that overlaps with a symbol configured as DL by TDD-Config-Common and/or TDD-Config-Dedicated
- A CG PUSCH occasion that overlaps with a symbol configured for SSB reception
- A CG PUSCH occasion that overlaps with a symbol for Type 0 CSS
- A CG PUSCH occasion that overlaps with a symbol for CORESET#0
- A CG PUSCH occasion that overlaps with a symbol indicated as DL (or flexible) by DCI 2_0
- A CG PUSCH occasion that overlaps with a DL subband (and/or a guard band) in a symbol configured for SBFD operation (however, this is a duplex enhancement function of Rel-18)

The "valid CG PUSCH occasion" may mean a CG PUSCH occasion that is not an "invalid CG PUSCH occasion."

Among M consecutive unused CG PUSCH occasions, a first indicated unused CG PUSCH occasion may be any of the following:

(Alt-a) A first (valid) CG PUSCH occasion that starts after the end of a current CG PUSCH occasion (that is, a CG PUSCH in which CG-UCI is transmitted)

(Alt-b) A first (valid) CG PUSCH occasion that starts/ends X slots/symbols after the start/end symbol of the current CG PUSCH occasion

(Alt-c) A first (valid) CG PUSCH occasion that starts/ends after the start/end symbol of the Y-th CG PUSCH occasion following the current CG PUSCH occasion

The value of X in Alt-b and/or the value of Y in Alt-c may be defined by the specification, may be configured by RRC, or may be indicated by the CG-UCI field.

In addition, the minimum value/maximum value of X and/or Y may be defined by the specification, or may be separately defined for different subcarrier spacings, different frequency ranges, or the like.

The following may or need not be included in the count of X slots/symbols:

- Slot/symbol configured as DL by TDD-Config-Common and/or TDD-Config-Dedicated
- Slot/symbol configured for SSB reception
- Slot/symbol for Type 0 CSS
- Slot/symbol for CORESET#0

In the count of Y CG PUSCH occasions, invalid CG PUSCH occasions may be taken into consideration or need not be taken into consideration.

In the count of Y CG PUSCH occasions, only the CG PUSCH occasions of the same CG configuration as the CG PUSCH in which the CG-UCI is transmitted may be counted, only the CG PUSCH occasions in the same CG period as the CG PUSCH in which the CG-UCI is transmitted may be counted, or the CG PUSCH occasions of any CG configuration may be counted.

<Option 2 of Generation Method 3>

The CG-UCI field indicates whether each of N consecutive (valid) CG PUSCH occasions is used.

Alt-a/Alt-b/Alt-c of Option 1 of Generation Method 3 can be reused to determine a first indicated unused CG PUSCH occasion among X consecutive CG PUSCH occasions.

In this case, the value of N may be defined by the specification (e.g., N=1), may be configured by RRC, or may be indicated by the CG-UCI field.

For example, in the case where N = 1, the CG-UCI field may indicate whether to use a first (valid) CG PUSCH occasion of any of the following:

- The CG-UCI field indicates whether to use a first (valid) CG PUSCH occasion that starts after the end of a current CG PUSCH occasion (that is, CG PUSCH in which CG-UCI is transmitted).
- The CG-UCI field indicates whether to use a first (valid) CG PUSCH occasion that starts/ends X slots/symbols after the start/end symbol of the current CG PUSCH occasion. Here, the value of X may be defined by the specification, may be configured by RRC, or may be indicated by a field in the CG-UCI.
- The CG-UCI field indicates whether to use a first (valid) CG PUSCH occasion that starts/ends after the start/end symbol of the Y-th CG PUSCH occasion following the current CG PUSCH occasion. Here, the value of Y may be defined by the specification, may be configured by RRC, or may be indicated by the CG-UCI field.

<Option 3 of Generation Method 3>

The CG-UCI field indicates a time window associated with the unused CG PUSCH occasion.

The association between the time window and the dynamic indication of the unused CG PUSCH occasion may be any of the following:

(Example 1) All CG PUSCH occasions in the time window need not be used.

(Example 2) All CG PUSCH occasions of the same CG configuration (as CG PUSCH in which CG-UCI is transmitted) in the time window need not be used.

(Example 3) All CG PUSCHs of a certain CG configuration are not used in the time window. In this case, the certain CG configuration may be defined by the specification (e.g., CG configuration having a plurality of CG PUSCH occasions in a CG period), may be configured by RRC (e.g., a group of CG configuration indexes configured by RRC), or may be indicated by the CG-UCI field.

(Dynamic Indication of Time Window)

The start of the time window may be any of the following:

(Alt-a) A first slot/symbol after the end of a current CG PUSCH occasion (that is, CG PUSCH in which CG-UCI is transmitted)
(Alt-b) A first slot/symbol after X slots/symbols from the start/end symbol of the current CG PUCCH occasion
(Alt-c) A first slot/symbol after the start/end symbol of the Y-th CG PUSCH occasion following the current CG PUSCH occasion

The value of X in Alt-b and/or the value of Y in Alt-c may be defined by the specification, may be configured by RRC, or may be indicated by the CG-UCI field.
The minimum value/maximum value of X and/or Y may be defined by the specification, or may be separately defined for different subcarrier spacings, different frequency ranges, or the like.
A duration of the time window may be defined by the specification, may be configured by RRC, or may be indicated by the CG-UCI field.
The following may or need not be included in the count of the duration of the time window:

- Slot/symbol configured as DL by TDD-Config-Common and/or TDD-Config-Dedicated
- Slot/symbol configured for SSB reception
- Slot/symbol for Type 0 CSS
- Slot/symbol for CORESET#0

<Option 4 of Generation Method 3>

The CG-UCI field indicates whether the CG PUSCH occasion is used per N slots/slot group/CG period in bitmap format.
The value of N may be defined by the specification (e.g., N=1), may be configured by RRC, or may be indicated by the CG-UCI field.
The following may or need not be included in the count of the value of N:

- Slot/symbol configured as DL by TDD-Config-Common and/or TDD-Config-Dedicated
- Slot/symbol configured for SSB reception
- Slot/symbol for Type 0 CSS
- Slot/symbol for CORESET#0

The maximum value of N may be defined by the specification, may be configured by RRC, or may be determined based on the periodicity of CG-UCI.
The following may or need not be included in the count of N slots/slot groups/CG periods:

- Slot/slot group/CG period configured as DL by TDD-Config-Common and/or TDD-Config-Dedicated
- Slot/slot group/CG period configured for SSB reception
- Slot/slot group/CG period for Type 0 CSS
- Slot/slot group/CG period for CORESET#0

The slot/slot group/CG period including each/any CG PUSCH overlapping with the following may or need not be included in the count of N slots/slot groups/CG periods:

- Slot/slot group/CG period configured as DL by TDD-Config-Common and/or TDD-Config-Dedicated
- Slot/slot group/CG period configured for SSB reception
- Slot/slot group/CG period for Type 0 CSS
- Slot/slot group/CG period for CORESET#0

Among N slots/slot groups/CG periods, a first slot/slot group/CG period may be determined as follows:

(Alt-a) A first slot/slot group/CG period after the slot/slot group/CG period (or start/end symbol) of a current CG PUSCH occasion (that is, CG PUSCH in which CG-UCI is transmitted)
(Alt-b) A first slot/slot group/CG period after X slots/symbols/slot groups/CG periods from the slot/slot group/CG period (or start/end symbol) of the current CG PUSCH occasion

(Alt-c) A first slot/slot group/CG period after Y CG PUSCH occasions following the current CG PUSCH occasion

The value of X in Alt-b and/or the value of Y in Alt-c may be defined by the specification, may be configured by RRC, or may be indicated by the CG-UCI field.

The minimum value/maximum value of X and/or Y may be defined by the specification, may be configured by RRC, or may be indicated by the CG-UCI field. In addition, the minimum value/maximum value of X and/or Y may be individually defined for different subcarrier spacings, different frequency ranges, or the like.

<Option 5 of Generation Method 3>

The CG-UCI field indicates the number of CG periods in which the CG PUSCH occasion is not used.

A first indicated CG period for an unused CG PUSCH occasion may be determined as follows:

(Alt-a) A first CG period (of the same CG configuration) after the end of a current CG PUSCH occasion (that is, CG PUSCH in which CG-UCI is transmitted)

(Alt-b) A first CG period (of the same CG configuration) after a symbol of X slots/symbols/slot groups/CG periods from the start/end symbol of the current CG PUSCH occasion

(Alt-c) A first CG period (of the same CG configuration) after the start/end symbol of the Y-th CG PUSCH occasion following the current CG PUSCH occasion

The value of X in Alt-b and/or the value of Y in Alt-c may be defined by the specification, may be configured by RRC, or may be indicated by the CG-UCI field.

The minimum value/maximum value of X and/or Y may be defined by the specification, may be configured by RRC, or may be indicated by the CG-UCI field. The minimum value/maximum value of X and/or Y may be separately defined for different subcarrier spacings, different frequency ranges, or the like. In addition, the minimum value/maximum value of X and/or Y may be individually defined for different subcarrier spacings, different frequency ranges, or the like.

The following may or need not be included in the count of the X slots/slot groups/CG periods:

- Slot/slot group/CG period configured as DL by TDD-Config-Common and/or TDD-Config-Dedicated
- Slot/slot group/CG period configured for SSB reception
- Slot/slot group/CG period for Type 0 CSS
- Slot/slot group/CG period for CORESET#0

The slot/slot group/CG period including each/any CG PUSCH overlapping with the following may or need not be included in the count of the X slots/slot groups/CG periods.

- Slot/slot group/CG period configured as DL by TDD-Config-Common and/or TDD-Config-Dedicated
- Slot/slot group/CG period configured for SSB reception
- Slot/slot group/CG period for Type 0 CSS
- Slot/slot group/CG period for CORESET#0

<Generation Method 4>

In Generation Method 4, a specific indication content in a case where the CG-UCI field indicates an unused CG PUSCH occasion in two stages (or two parts) will be described. Generation Method 4 is related to Proposal 2 and Proposal 5 described later.

(Alt-1) Presence Flag + Detailed Indication (Fixed Size)

In Alt-1, Part 1 CG-UCI (a first part of the CG-UCI field) indicates the presence or absence of Part 2 CG-UCI (a second part of the CG-UCI field), and the Part 2 CG-UCI indicates details of an unused CG PUSCH occasion. In Alt-1, the size of the Part 1 CG-UCI is one bit, and the size of the Part 2 CG-UCI is a fixed plurality of bits.

In this case, the Part 1 CG-UCI may be a 1-bit flag indicating whether the Part 2 CG-UCI is present together with an existing CG PUSCH field. For example, in a case where the one bit of the Part 1 CG-UCI indicates "0," it may indicate that the Part 2 CG-UCI is present, and in a case where the one bit of the Part 1 CG-UCI indicates "1," it may indicate that the Part 2 CG-UCI is not present (that is, there is no information on an unused CG PUSCH occasion reported together with the existing CG PUSCH occasion).

The Part 2 CG-UCI includes a fixed-size field indicating the details of the unused CG PUSCH occasion. A specific content of the Part 2 CG-UCI may be any of those described in Generation Method 3 above.

(Alt-2) Field Size + Detailed Indication (Variable Size)

In Alt-2, the part 1 CG-UCI of the CG-UCI field indicates the presence or absence of the Part 2 CG-UCI and a bit size of the Part 2 CG-UCI, and the Part 2 CG-UCI indicates the details of the unused CG PUSCH occasion. In Alt-2, the size of the Part 1 CG-UCI is a fixed X bits (X is plural), and the size of the Part 2 CG-UCI is variable.

For example, in a case where X = 2 and the Part 1 CG-UCI indicates "00," it may indicate that the Part 2 CG-UCI is not present (that is, there is no information on an unused CG PUSCH occasion reported together with the existing CG PUSCH occasion). In a case where the Part 1 CG-UCI indicates "01," it may indicate that the size of the Part 2 CG-UCI is a first value of candidate values (e.g., N1). In a case where the Part 2 CG-UCI indicates "10," it may indicate that the size of the Part 2 CG-UCI is a second value of the candidate values (e.g., N2). In a case where the Part 1 CG-UCI indicates "11," it may indicate that the size of the Part 2 CG-UCI is a third value of the candidate values (e.g., N3).

The Part 2 CG-UCI includes a variable-size field indicating the details of the unused CG PUSCH occasion. A specific content of the Part 2 CG-UCI may be any of those described in Generation Method 3 above.

(Note)

A terminal that encodes/decodes the CG-UCI composed of two parts can refer to encoding/decoding of the CSI Part 1 and the CSI Part 2 on a PUSCH disclosed in sections 5.2.3 and 5.2.4 of TS38.214.

In cases of the above-described Alt-1 and Alt-2, a base station first decodes the Part 1 CG-UCI, decodes the Part 2 CG-UCI (in a case where Part 2 CG-UCI is present) based on information of the Part 1 CG-UCI (e.g., presence or absence of Part 2 CG-UCI by Alt-1, the size of Part 2 CG-UCI by Alt-2), and decodes the UL-SCH.

Here, two methods are studied for the presence or absence of multiplexing new CG-UCI bits and other UCI.

First, in a case where other UCIs (e.g., HARQ-ACK, CSI, and the like) other than the new CG-UCI bits are not multiplexed in a CG-PUSCH, a terminal executes rate matching of the CG-UCI for the new CG-UCI bits as described in section 6.3.2.4.1.4 of TS 38.212.

In the rate matching of the new CG-UCI bits, a parameter of an offset for CG-UCI may be configured by the existing betaOffsetCG-UCI-r16 or may be configured by betaOffsetCG-UCI-unused-occasion-r18, which is a new RRC parameter. The parameter of the offset for CG-UCI may be described as follows:

$$\beta_{\text{offset}}^{\text{CG}-\text{UCI}} \quad \dots \text{(Expression 2)}$$

Hereinafter, the parameter of the offset for CG-UCI is referred to as $\beta^{\text{CG-UCI}}_{\text{offset}}$.

Second, in a case where other UCIs (e.g., HARQ-ACK, CSI, and the like) other than the new CG-UCI bits are multiplexed in a CG-PUSCH, some options are studied for the multiplexing of the UCIs in the CG-PUSCH. These options will be then described below.

As described above, Proposal 1 is based on the assumption that CG-UCI for the indication of an unused CG PUSCH occasion is single-part CG-UCI. Any of the following Options 1-1 and 1-2 is applied to the single-part CG-UCI for the indication of an unused CG PUSCH occasion.

<Option 1-1 of Proposal 1>

In Option 1-1, the same rule as the legacy CG-UCI bits (for HPN, RV, NDI, and COT sharing information) is applied to the single-part CG-UCI for the indication of an unused CG PUSCH occasion. Here, in the rule for the legacy CG-UCI bits, the legacy CG-UCI bits are jointly encoded and rate-matched with HARQ-ACK bits. In addition, in the rule for the legacy CG-UCI bits, the coding part including the legacy CG-UCI bits and the HARQ-ACK bits has a higher priority than the CSI part 1 and the CSI part 2 in the rate matching. For example, in the case based on the rule for the legacy CG-UCI bits, a priority relationship between the legacy CG-UCI bits, the HARQ-ACK, the CSI part 1 bits, and the CSI part 2 bits is represented as follows:

-

[legacy CG-UCI bits and HARQ-ACK if any] > [CSI part 1 bits if any] > [CSI part 2 bits if any]

The above representation of the priority relationship will be described.

For example, "[ ]" in the above-described representation of the priority relationship means a single coding part. For example, contents (e.g., a part of information or information bits) in [ ] are jointly encoded as a single coding part.

For example, [A and B] means that a content referred to as A (e.g., a part of information or information bits) and a content referred to as B are jointly encoded as a single coding part. In addition, for example, [A and B if any] means that the content referred to as A and the content referred to as B if B is present, are jointly encoded as a single coding part. In other words, [A and B if any] means that, in a case where the content referred to as B is not present, only the content referred to as A is encoded as a single coding part. In addition, for example, [C if any] means that the content referred to as C is encoded as a single coding part if C is present. In other words, [C if any] means that, if the content referred to as C is not present, a coding part corresponding to [C if any] is not present.

In addition, in the above representation of the priority relationship, a relationship indicated by ">" means that a former part is prioritized over a latter part, that is, the former part has a higher priority than the latter part in a case of performing rate matching. For example, [A and B] > [C] means that, in the rate matching, a coding part corresponding to [A and B] is prioritized over a coding part corresponding to [C]. In addition, for example, [C if any] > [D] means that, in the rate matching, in a case where the content referred to as C is present, a coding part corresponding to [C if any] is prioritized over a coding part corresponding to [D]. In other words, [C if any] > [D] means that, in the rate matching, in a case where the content referred to as C is not present, the coding part corresponding to [D] may be prioritized over [C if any] because the coding part corresponding to [C if any] is not present.

Note that, in a case where a total number of the coding parts is larger than the number of polar encoders for the UCI multiplexed in a PUSCH, coding parts having lower priorities need not be transmitted until a total number of the coding parts to be transmitted does not exceed the limitation on the polar encoder.

For example, in the case of the relationship of the UCI based on the rule for the legacy CG-UCI bits described above, [legacy CG-UCI bits and HARQ-ACK if any] means that the legacy CG-UCI bits and the HARQ-ACK, if any, are jointly encoded as a single coding part. In addition, [legacy CG-UCI bits and HARQ-ACK if any] > [CSI part 1 bits if any] > [CSI part 2 bits if any] means that, in the rate matching, [legacy CG-UCI bits and HARQ-ACK if any] is prioritized over [CSI part 1 bits if any] and [CSI part 2 bits if any], and [CSI part 1 bits if any] is prioritized over [CSI part 2 bits if any]. For example, in a case where the HARQ-ACK is not present, the coding part having the highest priority is a coding part in which only the legacy CG-UCI bits are encoded.

For example, in a case where the same rule as the legacy CG-UCI bits described above is applied to the new CG-UCI bits, a relationship between the new CG-UCI bits corresponding to single-part CG-UCI for the indication of an unused CG PUSCH occasion, the HARQ-ACK, the CSI part 1 bits, and the CSI part 2 bits is represented as follows:

-

[new CG-UCI bits and HARQ-ACK if any] > [CSI part 1 bits if any] > [CSI part 2 bits if any]

For example, in the case of this relationship, [new CG-UCI bits and HARQ-ACK if any] means that the new CG-UCI bits and the HARQ-ACK, if any, are jointly encoded as a single coding part. Then, [new CG-UCI bits and HARQ-ACK if any] > [CSI part 1 bits if any] > [CSI part 2 bits if any] means that, in the rate matching, [new CG-UCI bits and HARQ-ACK if any] is prioritized over [CSI part 1 bits if any] and [CSI part 2 bits if any], and [CSI part 1 bits if any] is prioritized over [CSI part 2 bits if any].

According to Option 1-1 of Proposal 1, since the same rule as the legacy CG-UCI bits is applied to the new CG-UCI bits, it is possible to transmit the new CG-UCI bits, that is, to report the dynamic indication of an unused CG PUSCH occasion by CG-UCI with little change in the specification and a simple method.

<Option 1-2 of Proposal 1>

In Option 1-2, a new rule different from the rule of multiplexing for the legacy CG-UCI bits (for HPN, RV, NDI, and COT sharing information) is defined for single-part CG-UCI (that is, new CG-UCI bits) for the indication of an unused CG PUSCH occasion, and the defined new rule is applied.

The new rule is not particularly limited, but for example, one of rules of Options 1-2A to 1-2C described below may be applied.

<Option 1-2A>

In Option 1-2A, the new CG-UCI bits, the HARQ-ACK bits, the CSI part 1 bits, and the CSI part 2 bits are all individually encoded. In other words, among these four pieces of information, two or more pieces of information are not encoded together. In Option 1-2A, in the rate matching, a relationship between the priority of the new CG-UCI bits and the priorities of other UCIs may be any one of the following four relationships of Alt a-1 to Alt a-4:

-

[HARQ-ACK bits if any] > [CSI part 1 bits if any] > [CSI part 2 bits if any] > [new CG-UCI bits]　　　　Alt a-1:

-

[HARQ-ACK bits if any] > [CSI part 1 bits if any] > [new CG-UCI bits] > [CSI part 2 bits if any]　　　　Alt a-2:

-

[HARQ-ACK bits if any] > [new CG-UCI bits] > [CSI part 1 bits if any] > [CSI part 2 bits if any]　　　　Alt a-3:

-

[new CG-UCI bits] > [HARQ-ACK bits if any] > [CSI part 1 bits if any] > [CSI part 2 bits if any]　　　　Alt a-4:

In the rate matching, $\beta^{CG-UCI}_{offset}$ may be configured by the existing "betaOffsetCG-UCI-r16" or a new RRC parameter. For example, the new RRC parameter may be denoted as "betaOffsetCG-UCI-unused-occasion-r18." In a case where $\beta^{CG-UCI}_{offset}$ is configured by the existing "betaOffsetCG-UCI-r16," there may be an impact on the specification that "betaOffsetCG-UCI-r16" is configured when "cg-RetransmissionTimer" is not configured.

In Option 1-2A, the new CG-UCI bits, the HARQ-ACK bits, the CSI part 1 bits, and the CSI part 2 bits are all individually encoded, and thus encoding (e.g., setting a size of the offset) suitable for each piece of information can be performed.

<Option 1-2B>

In Option 1-2B, the new CG-UCI bits are encoded together with the CSI part 1 bits and are encoded separately from the HARQ-ACK bits and the CSI part 2 bits. In Option 1-2B, in the rate matching, the priority of the new CG-UCI bits and the CSI part 1 bits may follow the existing priority of the CSI part 1 bits. In other words, the priority of the new CG-UCI bits and the CSI part 1 bits is lower than the priority of the HARQ-ACK bits and is higher than the priority of the CSI part 2 bits. That is, the priority relationship in Option 1-2B may be as follows:

-

[HARQ-ACK bits if any] > [new CG-UCI bits and CSI part 1 bits if any] > [CSI part 2 bits if any]

<Option 1-2C>

In Option 1-2C, the new CG-UCI bits are encoded together with the CSI part 2 bits and are encoded separately from the HARQ-ACK bits and the CSI part 1 bits. In Option 1-2C, in the rate matching, the priority of the new CG-UCI bits and the CSI part 2 bits may follow the existing priority of the CSI part 2 bits. In other words, the priority of the new CG-UCI bits and the CSI part 2 bits is lower than the priority of the HARQ-ACK bits and is lower than the priority of the CSI part 1 bits. That is, the priority relationship in Option 1-2C may be as follows:

-

[HARQ-ACK bits if any] > [CSI part 1 bits if any] > [new CG-UCI bits and CSI part 2 bits if any]

Note that, in the above-described Options 1-2A to 1-2C, an example has been described in which, in a case where the new CG-UCI bits and a certain UCI (e.g., first UCI) are encoded together, the priority of the new CG-UCI bits and the first UCI follows the existing priority of the first UCI, but the present disclosure is not limited thereto. For example, in a case where the new CG-UCI bits and a certain UCI (e.g., first UCI) are encoded together, the priority of the new CG-UCI bits and the first UCI may be different from the existing priority of the first UCI. For example, in a case where the new CG-UCI bits and the HARQ-ACK are encoded together, the priority of the new CG-UCI bits and the HARQ-ACK may be lower than the priority of the CSI part 1 bits, or may be lower than the priority of the CSI part 2. In addition, for example, in a case where the new CG-UCI bits and the CSI part 1 bits are encoded together, the priority of the new CG-UCI bits and the CSI part 1 bits may be higher than the priority of the HARQ-ACK. That is, the priority relationship may be different between a case where the new CG-UCI bits and a certain UCI are encoded together and a case where the new CG-UCI bits and a certain UCI are encoded separately.

In addition, in the rate matching of the above-described Options 1-2A to 1-2C, $\beta^{CG\text{-}UCI}_{offset}$ may be configured by the existing "betaOffsetCG-UCI-r16" or a new RRC parameter. For example, the new RRC parameter may be denoted as "betaOffsetCG-UCI-unused-occasion-r18."

According to Proposal 1 above, an appropriate rule is applied to the encoding and the rate matching of the single-part new CG-UCI bits, and thus it is possible to appropriately transmit the new CG-UCI bits, that is, to report the dynamic indication of an unused CG PUSCH occasion by CG-UCI.

<Proposal 2>

In Proposal 2, the following two points are assumed:

- Whether the operating frequency band is a licensed spectrum or cg-RetransmissionTimer is not configured.
- The CG-UCI for an indication of an unused CG PUSCH occasion is two-part CG-UCI.

In the following description, the two-part CG-UCI for the indication of an unused CG PUSCH occasion, that is, the two parts, are referred to as "new CG-UCI part 1 bits" and "new CG-UCI part 2 bits," respectively. Here, in a case of performing rate matching, the "new CG-UCI part 1 bits" has a higher priority than the "new CG-UCI part 2 bits." In Proposal 2, the two parts may be collectively referred to as "new CG-UCI bits." In addition, the number of bits of each of the "new CG-UCI part 1 bits" and the "new CG-UCI part 2 bits" may be one, two or more, or different from each other.

A terminal generates new CG-UCI bits. The generation method may be the same as the method described in Proposal 1 (e.g., Generation Method 4).

Two methods are herein studied for the presence or absence of multiplexing the new CG-UCI bits and other UCI.

First, in a case where other UCIs (e.g., HARQ-ACK, CSI, and the like) other than the new CG-UCI bits are not multiplexed in a CG-PUSCH, a terminal executes individual encoding and individual rate matching for the new CG-UCI part 1 bits and the new CG-UCI part 2 bits.

In the rate matching of the new CG-UCI part 1 bits and the new CG-UCI part 2 bits, $\beta^{CG\text{-}UCI}_{offset}$, which is a common parameter of an offset for CG-UCI, may be applied to each of the new CG-UCI part 1 bits and the new CG-UCI part 2 bits. In this case, $\beta^{CG\text{-}UCI}_{offset}$ may be configured by the existing betaOffsetCG-UCI-r16 or may be configured by betaOffsetCG-UCI-unused-occasion-r18, which is a new RRC parameter.

In addition, in the rate matching of the new CG-UCI part 1 bits and the new CG-UCI part 2 bits, $\beta^{CG\text{-}UCI\text{-}part1}_{offset}$, which is a parameter of an offset for CG-UCI, may be applied to the new CG-UCI part 1 bits, and $\beta^{CG\text{-}UCI\text{-}part2}_{offset}$, which is a parameter of an offset for CG-UCI, may be applied to the new CG-UCI part 2 bits. In this case, $\beta^{CG\text{-}UCI\text{-}part1}_{offset}$ and $\beta^{CG\text{-}UCI\text{-}part2}_{offset}$ may be individually configured. For example, $\beta^{CG\text{-}UCI\text{-}part1}_{offset}$ and $\beta^{CG\text{-}UCI\text{-}part2}_{offset}$ may be configured by different RRC parameters or may be configured by a common RRC parameter. For example, the parameter $\beta^{CG\text{-}UCI\text{-}part1}_{offset}$ of the offset for the new CG-UCI part 1 bits may be configured by an RRC parameter "betaOffsetCG-UCI-part1-unused-occasion-r18," and the parameter $\beta^{CG\text{-}UCI\text{-}part2}_{offset}$ of the offset for the new CG-UCI part 2 bits may be configured by an RRC parameter "betaOffsetCG-UCI-part2-unused-occasion-r18." Alternatively, between two offset parameters, one offset parameter may be configured from the other offset parameter. For example, the one offset parameter may be configured by performing a specific operation on the other offset parameter.

Second, in a case where other UCIs (e.g., HARQ-ACK, CSI, and the like) other than the new CG-UCI bits are multiplexed in a CG-PUSCH, some options are studied for the multiplexing of the UCIs in the CG-PUSCH. These options will be then described below.

As described above, Proposal 2 is based on the assumption that the CG-UCI for the indication of an unused CG PUSCH occasion is two-part CG-UCI. Any of the following Options 2-1 or 2-7 is applied to the two-part CG-UCI for the indication of an unused CG PUSCH occasion.

<Option 2-1 of Proposal 2>

In Option 2-1, each UCI including the two-part CG-UCI is individually encoded. In Option 2-1, a priority relationship including the priorities of the two-part CG-UCI, that is, the priority of the new CG-UCI part 1 bits and the priority of the new CG-UCI part 2 bits may be any of the following relationships of Options 2-1A to 2-1K.

- Option 2-1A:

[new CG-UCI part 1 bits] > [new CG-UCI part 2 bits] > [HARQ-ACK if any] > [CSI part 1 bits if any] > [CSI part 2 bits if any]

- Option 2-1B:

[new CG-UCI part 1 bits] > [HARQ-ACK if any] > [new CG-UCI part 2 bits] > [CSI part 1 bits if any] > [CSI part 2 bits if any]

- Option 2-1C:

[new CG-UCI part 1 bits] > [HARQ-ACK if any] > [CSI part 1 bits if any] > [new CG-UCI part 2 bits] > [CSI part 2 bits if any]

- Option 2-1D:

[new CG-UCI part 1 bits] > [HARQ-ACK if any] > [CSI part 1 bits if any] > [CSI part 2 bits if any] > [new CG-UCI part 2 bits]

- Option 2-1E:

[HARQ-ACK if any] > [new CG-UCI part 1 bits] > [new CG-UCI part 2 bits] > [CSI part 1 bits if any] > [CSI part 2 bits if any]

- Option 2-1F:

[HARQ-ACK if any] > [new CG-UCI part 1 bits] > [CSI part 1 bits if any] > [new CG-UCI part 2 bits] > [CSI part 2 bits if any]

- Option 2-1G:

[HARQ-ACK if any] > [new CG-UCI part 1 bits] > [CSI part 1 bits if any] > [CSI part 2 bits if any] > [new CG-UCI part 2 bits]

- Option 2-1H:

[HARQ-ACK if any] > [CSI part 1 bits if any] > [new CG-UCI part 1 bits] > [new CG-UCI part 2 bits] > [CSI part 2 bits if any]

- Option 2-1J:

[HARQ-ACK if any] > [CSI part 1 bits if any] > [new CG-UCI part 1 bits] > [CSI part 2 bits if any] > [new CG-UCI part 2 bits]

- Option 2-1K:

[HARQ-ACK if any] > [CSI part 1 bits if any] > [CSI part 2 bits if any] > [new CG-UCI part 1 bits] > [new CG-UCI part 2 bits]

In Option 2-1, the new CG-UCI part 1 bits, the new CG-UCI part 2 bits, the HARQ-ACK bits, the CSI part 1 bits, and the CSI part 2 bits are all individually encoded, and thus encoding (e.g., setting a size of the offset) suitable for each piece of information can be performed.

<Option 2-2 of Proposal 2>

In Option 2-2, the new CG-UCI part 1 bits are encoded together with the HARQ-ACK bits. That is, the rule for the legacy CG-UCI bits is applied to the new CG-UCI part 1 bits. In Option 2-2, the new CG-UCI part 2 bits are encoded separately from other UCI bits. In Option 2-2, the priority relationship including the priorities of the two-part CG-UCI, that is, the priority of the new CG-UCI part 1 bits and the priority of the new CG-UCI part 2 bits may be any of the following relationships of Options 2-2A to 2-2E.

- Option 2-2A:

[new CG-UCI part 1 bits, and HARQ-ACK if any] > [CSI part 1 bits if any] > [CSI part 2 bits if any] > [new CG-UCI part 2 bits]

- Option 2-2B:

[new CG-UCI part 1 bits, and HARQ-ACK if any] > [CSI part 1 bits if any] > [new CG-UCI part 2 bits] > [CSI part 2 bits if any]

- Option 2-2C:

[new CG-UCI part 1 bits, and HARQ-ACK if any] > [new CG-UCI part 2 bits] > [CSI part 1 bits if any] > [CSI part 2 bits if any]

- Option 2-2D:

[new CG-UCI part 1 bits, and HARQ-ACK if any] > [CSI part 1 bits if any] > [CSI part 2 bits and/or new CG-UCI part 2 bits]

- Option 2-2E:

[new CG-UCI part 1 bits, and HARQ-ACK if any] > [CSI part 1 bits and/or new CG-UCI part 2 bits] > [CSI part 2 bits if any]

Note that, [CSI part 2 bits and/or new CG-UCI part 2 bits] in Option 2-2D described above may mean [CSI part 2 bits and new CG-UCI part 2 bits] or may mean [CSI part 2 bits or new CG-UCI part 2 bits]. Further, [CSI part 2 bits and new CG-UCI part 2 bits] indicates that the CSI part 2 bits and the new CG-UCI part 2 bits are encoded together. In addition, [CSI part 2 bits or new CG-UCI part 2 bits] indicates that one of the CSI part 2 bits or the new CG-UCI part 2 bits may be encoded and the other may be discarded (or dropped).

As in Option 2-2D, [CSI part 1 bits and/or new CG-UCI part 2 bits] in Option 2-2E described above may mean [CSI part 1 bits and new CG-UCI part 2 bits] or may mean [CSI part 1 bits or new CG-UCI part 2 bits]. Further, [CSI part 1 bits or new CG-UCI part 2 bits] indicates that one of the CSI part 1 bits or the new CG-UCI part 2 bits may be encoded and the other may be discarded (or dropped).

In Option 2-2, the new CG-UCI part 1 bits are encoded together with the HARQ-ACK bits. Accordingly, the total number of coding parts can be reduced, and the coding part including the new CG-UCI part 1 bits can be transmitted with the same priority as the HARQ-ACK bits, and thus the dynamic indication of an unused CG PUSCH occasion by CG-UCI can be appropriately reported.

<Option 2-3 of Proposal 2>

In Option 2-3, the new CG-UCI part 1 bits are encoded together with the HARQ-ACK bits. That is, the rule for the legacy CG-UCI bits is applied to the new CG-UCI part 1 bits. In Option 2-3, the new CG-UCI part 2 bits are encoded together with the CSI part 1 bits or the CSI part 2 bits. Note that the priority relationship including the priorities of the two-part CG-UCI in Option 2-3, that is, the priority of the coding part including the new CG-UCI part 1 bits and the priority of the coding part including the new CG-UCI part 2 bits may be any of the following relationships of Options 2-3A and 2-3B.

- Option 2-3A:

[new CG-UCI part 1 bits, and HARQ-ACK if any] > [new CG-UCI part 2 bits and CSI part 1 bits if any] > [CSI part 2 bits if any]

- Option 2-3B:

[new CG-UCI part 1 bits, and HARQ-ACK if any] > [CSI part 1 bits if any] > [new CG-UCI part 2 bits and CSI part 2 bits if any]

In Option 2-3, the new CG-UCI part 1 bits are encoded together with the HARQ-ACK bits, and the new CG-UCI part 2 bits are encoded together with the CSI part 1 bits or the CSI part 2 bits. Accordingly, the total number of coding parts can be further reduced, and the coding part including the new CG-UCI part 1 bits can be transmitted with the same priority as the HARQ-ACK bits, and thus the dynamic indication of an unused CG PUSCH occasion by CG-UCI can be appropriately reported.

<Option 2-4 of Proposal 2>

In Option 2-4, the new CG-UCI part 1 bits are encoded together with the CSI part 1 bits, and the new CG-UCI part 2 bits are encoded separately from other UCI bits. In Option 2-4, the priority relationship of the two-part CG-UCI, that is, the priority of the coding part including the new CG-UCI part 1 bits and the priority of the coding part including the new CG-UCI part 2 bits may be any of the following relationships of Options 2-4A and 2-4B.

- Option 2-4A:

[HARQ-ACK bits if any] > [new CG-UCI part 1 bits and CSI part 1 bits if any] > [new CG-UCI part 2 bits] > [CSI part 2 bits if any]

- Option 2-4B:

[HARQ-ACK bits if any] > [new CG-UCI part 1 bits and CSI part 1 bits if any] > [CSI part 2 bits if any] > [new CG-UCI part 2 bits]

In Option 2-4, the new CG-UCI part 1 bits are encoded together with the CSI part 1 bits. Accordingly, the total number of coding parts can be reduced, and thus the dynamic indication of an unused CG PUSCH occasion by CG-UCI can be appropriately reported.

<Option 2-5 of Proposal 2>

In Option 2-5, the new CG-UCI part 1 bits are encoded together with the CSI part 1 bits, and the new CG-UCI part 2 bits are encoded together with the CSI part 2 bits. In Option 2-5, the priority relationship of the two-part CG-UCI, that is, the priority of the coding part including the new CG-UCI part 1 bits and the priority of the coding part including the new CG-UCI part 2 bits may be the following relationship:

[HARQ-ACK if any] > [new CG-UCI part 1 bits and CSI part 1 bits if any] > [new CG-UCI part 2 bits and CSI part 2 bits if any]

In Option 2-5, the new CG-UCI part 1 bits are encoded together with the CSI part 1 bits, and the new CG-UCI part 2 bits are encoded together with the CSI part 2 bits. Accordingly, the total number of coding parts can be further reduced, and thus the dynamic indication of an unused CG PUSCH occasion by CG-UCI can be appropriately reported.

<Option 2-6 of Proposal 2>

In Option 2-6, the new CG-UCI part 1 bits are encoded together with the CSI part 2 bits. In Option 2-6, the new CG-UCI part 2 bits are encoded separately from other UCI bits. In Option 2-6, the priority relationship including the priorities of the two-part CG-UCI, that is, the priority of the coding part including the new CG-UCI part 1 bits and the priority of the coding part including the new CG-UCI part 2 bits may be the following relationship:

[HARQ-ACK bits if any] > [CSI part 1 bits if any] > [new CG-UCI part 1 bits and CSI part 2 bits if any] > [new CG-UCI part 2 bits]

In Option 2-6, the new CG-UCI part 1 bits are encoded together with the CSI part 2 bits. Accordingly, since the total number of coding parts can be reduced, the dynamic indication of an unused CG PUSCH occasion by CG-UCI can be appropriately reported.

<Option 2-7 of Proposal 2>

In Option 2-7, the new CG-UCI part 1 bits are encoded separately from other UCI bits. In Option 2-7, the new CG-UCI part 2 bits are encoded together with the HARQ-ACK bits, the CSI part 1 bits, or the CSI part 2 bits. In Option 2-7, the priority relationship including the priorities of the two-part CG-UCI, that is, the priority of the coding part including the new CG-UCI part 1 bits and the priority of the coding part including the new CG-UCI part 2 bits may be any of the following relationships.

- Option 2-7A:

[HARQ-ACK bits if any] > [CSI part 1 bits if any] > [new CG-UCI part 1 bits]> [new CG-UCI part 2 bits and CSI part 2 bits if any]

- Option 2-7B:

[HARQ-ACK bits if any] > [new CG-UCI part 1 bits]> [new CG-UCI part 2 bits and CSI part 1 bits if any] > [CSI part 2 bits if any]

- Option 2-7C:

[HARQ-ACK bits if any] > [new CG-UCI part 1 bits]> [CSI part 1 bits if any] > [new  CG-UCI part 2 bits and CSI part 2 bits if any]

- Option 2-7D:

[HARQ-ACK bits if any] > [new CG-UCI part 1 bits]> [new CG-UCI part 2 bits and CSI part 1 bits if any] > [CSI part 2 bits if any]

- Option 2-7E:

[new CG-UCI part 1 bits] > [HARQ-ACK bits if any] > [CSI part 1 bits if any] > [new CG-UCI part 2 bits and CSI part 2 bits if any]

- Option 2-7F:

[new CG-UCI part 1 bits] > [HARQ-ACK bits if any] > [new CG-UCI part 2 bits and CSI part 1 bits if any] > [CSI part 2 bits if any]

- Option 2-7G:

[new CG-UCI part 1 bits] > [new CG-UCI part 2 bits and HARQ-ACK bits if any] > [CSI part 1 bits if any] > [CSI part 2 bits if any]

In Option 2-7, the new CG-UCI part 1 bits are encoded separately from other UCI bits, and the new CG-UCI part 2 bits are encoded together with the HARQ-ACK bits, the CSI part 1 bits, or the CSI part 2 bits. Accordingly, appropriate encoding (e.g., setting of the offset) can be performed for the new CG-UCI part 1 bits, and thus the dynamic indication of an unused CG PUSCH occasion by CG-UCI can be appropriately reported.

According to Proposal 2 above, an appropriate rule is applied to the encoding and the rate matching of the two-part new CG-UCI bits, and thus it is possible to appropriately transmit the new CG-UCI bits, that is, to report the dynamic indication of an unused CG PUSCH occasion by CG-UCI.

<Proposal 3>

In Proposal 3, support for reporting of an unused CG occasion by CG-UCI in an unlicensed spectrum will be described.

<Option 1 of Proposal 3>

In Option 1 of Proposal 3, in an unlicensed spectrum or in a case where cg-RetransmissionTimer is configured, a terminal is not supported in reporting a dynamic indication of an unused CG occasion by CG-UCI. In other words, in Option 1 of Proposal 3, in an unlicensed spectrum, a terminal is not supported in reporting a dynamic indication of an unused CG occasion by CG-UCI. Alternatively, in Option 1 of Proposal 3, a terminal is not supported in reporting a dynamic indication of an unused CG occasion by CG-UCI in a case where cg-RetransmissionTimer is configured.

For example, in a case where cg-RetransmissionTimer is configured, a terminal need not assume that the terminal is configured to report the dynamic indication of an unused CG occasion by CG-UCI for any CG configuration.

In addition, for example, in a case where cg-RetransmissionTimer is configured, a terminal does not report the dynamic indication of an unused CG occasion by CG-UCI in any CG-PUSCH.

In Option 1 of Proposal 3, as a variation, a terminal need not be supported in reporting the dynamic indication of an unused CG occasion by CG-UCI in a specific frequency range (e.g., range referred to as FR2-2) and/or a specific SCS (e.g., any SCS of 480 kHz or 960 kHz). In other words, in this variation, a terminal may be supported in reporting the dynamic indication of an unused CG occasion by CG-UCI in a frequency range other than the specific frequency range and/or an SCS other than the specific SCS.

<Option 2 of Proposal 3>

In Option 2 of Proposal 3, in an unlicensed spectrum or in a case where cg-RetransmissionTimer is configured, a terminal is supported in reporting the dynamic indication of an unused CG occasion by CG-UCI. In other words, in Option 2 of Proposal 3, in an unlicensed spectrum, a terminal is supported in reporting the dynamic indication of an unused CG occasion by CG-UCI. Alternatively, in Option 2 of Proposal 3, in a case where cg-RetransmissionTimer is configured, a terminal is supported in reporting the dynamic indication of an unused CG occasion by CG-UCI.

For example, in a case where cg-RetransmissionTimer is configured, a terminal may assume that the terminal is configured to report the dynamic indication of an unused CG occasion by CG-UCI for any CG configuration.

In addition, for example, in a case where cg-RetransmissionTimer is configured, a terminal may report the dynamic indication of an unused CG occasion by CG-UCI in any CG-PUSCH.

In Option 2 of Proposal 3, as a variation, a terminal may be supported in reporting the dynamic indication of an unused CG occasion by CG-UCI in a specific frequency range (e.g., range referred to as FR2-2) and/or a specific SCS (e.g., any SCS of 480 kHz or 960 kHz).

According to Proposal 3, the presence or absence of the support for reporting the dynamic indication of an unused CG occasion by CG-UCI is specified according to whether the operating frequency band is an unlicensed spectrum or cg-RetransmissionTimer is configured. A terminal, for example, determines whether to report the dynamic indication of an unused CG occasion by CG-UCI based on the presence or absence of the support specified according to whether the operating frequency band is an unlicensed spectrum or whether cg-RetransmissionTimer is configured, determines UCI according to the determination, and transmits the UCI. This makes it possible to appropriately report the dynamic indication of an unused CG occasion.

<Proposal 4>

In Proposal 4, the following two points are assumed:

- The operating frequency band is an unlicensed spectrum or cg-RetransmissionTimer is configured.
- The CG-UCI for an indication of an unused CG PUSCH occasion is single-part CG-UCI.

A terminal generates new CG-UCI bits. The generation method may be the same as the method described in Proposal 1.

Several methods are herein studied for the presence or absence of multiplexing the new CG-UCI bits and the legacy CG-UCI bits.

First, in a case where the new CG-UCI bits are included in the existing CG-UCI as a new field (that is, Option 2 of Generation Method 1 described in Proposal 1), a terminal may generate one extended CG-UCI. A method of generating the extended CG-UCI is not particularly limited. For example, the terminal may generate one extended CG-UCI by adding the new CG-UCI bits to the legacy CG-UCI bits. Alternatively, the terminal may generate one extended CG-UCI by adding the legacy CG-UCI bits to the new CG-UCI bits. Here, the legacy CG-UCI bits may be, for example, CG-UCI for the HPN, the RV, the NDI, and the COT sharing information.

Second, in a case where the new CG-UCI bits are of CG-UCI different from the existing CG-UCI (that is, Option 1 of Generation Method 1 described in Proposal 1), a terminal performs processing by distinguishing between the new CG-UCI bits and other CG-UCI (e.g., existing CG-UCI).

For example, in a case where other UCIs (e.g., HARQ-ACK, CSI, and the like) other than the new CG-UCI bits and the legacy CG-UCI bits are not multiplexed in a CG-PUSCH, a terminal may execute encoding and rate matching by distinguishing between the new CG-UCI bits and the legacy CG-UCI bits.

In this case, a relationship between the priority of the new CG-UCI bits and the priority of the legacy CG-UCI bits may be any of the following Alt. 1 or 2:

Alt. 1:

$$[\text{legacy CG-UCI bits}] > [\text{new CG-UCI bits}]$$

Alt. 2:

$$[\text{new CG-UCI bits}] > [\text{legacy CG-UCI bits}]$$

For example, in a case where other UCIs (e.g., HARQ-ACK, CSI, and the like) other than the new CG-UCI bits are multiplexed in a CG-PUSCH, several options are studied for the multiplexing of the UCIs in the CG-PUSCH. These options will be then described below.

<Option 4-1 of Proposal 4>

In Option 4-1, regarding single-part CG-UCI for the indication of an unused CG PUSCH occasion, the single-part CG-UCI bits (that is, new CG-UCI bits) are encoded together with the legacy CG-UCI bits (for HPN, RV, NDI, and COT sharing information). The rule for the legacy CG-UCI bits may be applied to the coding part including the new CG-UCI bits and the legacy CG-UCI bits. In the rule for the legacy CG-UCI bits, the legacy CG-UCI bits are encoded and rate-matched together with the HARQ-ACK bits. In addition, in the rule for the legacy CG-UCI bits, in the rate matching, the coding part including the legacy CG-UCI bits, the new CG-UCI bits, and the HARQ-ACK bits has a higher priority than the CSI part 1 and the CSI part 2.

A relationship between the new CG-UCI bits, the legacy CG-UCI bits, the HARQ-ACK, the CSI part 1 bits, and the CSI part 2 bits is represented as follows:

[legacy CG-UCI bits and new CG-UCI bits, and HARQ-ACK if any] > [CSI part 1 bits if any] > [CSI part 2 bits if any]

In Option 4-1, it is possible to transmit the CG-UCI to which the new CG-UCI bits are added while minimizing the change in the specification.

According to Option 4-1 of Proposal 4, the same rule as the legacy CG-UCI bits is applied to the new CG-UCI bits, and thus it is possible to transmit the new CG-UCI bits, that is, to report the dynamic indication of an unused CG PUSCH occasion by CG-UCI with little change in the specification and a simple method.

<Option 4-2 of Proposal 4>

In Option 4-2, the single-part CG-UCI for the indication of an unused CG PUSCH occasion is encoded separately from the legacy CG-UCI bits. Option 4-2 is subdivided into the following options of Options 4-2A to 4-2C. In the following Options 4-2A to 4-2C, the legacy CG-UCI bits and the HARQ-ACK bits are encoded together.

<Option 4-2A>

In Option 4-2A, the new CG-UCI bits, the legacy CG-UCI bits and the HARQ-ACK bits that are encoded together, the CSI part 1 bits, and the CSI part 2 bits are individually encoded. In Option 4-2A, in the rate matching, a relationship between the priority of the new CG-UCI bits and the priorities of other UCIs may be any one of the following four relationships of Alts a-1 to a-4:

- 

[legacy CG-UCI bits and HARQ-ACK if any] > [CSI part 1 bits if any] > [CSI part 2 bits if any] > [new CG-UCI bits]

Alt a-1:

- 

[legacy CG-UCI bits and HARQ-ACK if any] > [CSI part 1 bits if any] > [new CG-UCI bits] > [CSI part 2 bits if any]

Alt a-2:

- 

[legacy CG-UCI bits and HARQ-ACK if any] > [new CG-UCI bits] > [CSI part 1 bits if any] > [CSI part 2 bits if any]

Alt a-3:

- 

[new CG-UCI bits] > [legacy CG-UCI bits and HARQ-ACK if any] > [CSI part 1 bits if any] > [CSI part 2 bits if any]

Alt a-4:

Note that, for the new CG-UCI bits, $\beta^{CG\text{-}UCI}_{offset}$ may be configured by the existing "betaOffsetCG-UCI-r16" or a new RRC parameter. For example, the new RRC parameter may be denoted as "betaOffsetCG-UCI-unused-occasion-r18."

In Option 4-2A, the new CG-UCI bits are encoded separately from other UCI bits, and thus encoding (e.g., setting a size of the offset) suitable for each piece of information can be performed.

<Option 4-2B>

In Option 4-2B, the new CG-UCI bits are encoded together with the CSI part 1 bits, and the new CG-UCI bits are encoded separately from the legacy CG-UCI bits and the HARQ-ACK bits that are encoded together, and the CSI part 2 bits. The rate matching is also performed separately. In Option 4-2B, in the rate matching, the priority of the new CG-UCI bits and the CSI part 1 bits may follow the existing priority of the CSI part 1 bits. In other words, the priority of the coding part including the new CG-UCI bits and the CSI part 1 bits is lower than the priority of the HARQ-ACK bits and is higher than the priority of the CSI part 2 bits. That is, the relationship in Option 4-2B may be as follows:

[legacy CG-UCI bits and HARQ-ACK if any] > [new CG-UCI bits and CSI part 1 bits if any] > [CSI part 2 bits if any]

<Option 4-2C>

In Option 4-2C, the new CG-UCI bits are encoded together with the CSI part 2 bits, and the new CG-UCI bits are encoded separately from the legacy CG-UCI bits and the HARQ-ACK bits that are encoded together, and the CSI part 1 bits. In Option 4-2C, in the rate matching, the priority of the new CG-UCI bits and the CSI part 2 bits may follow the existing priority of the CSI part 2 bits. In other words, the priority of the coding part including the new CG-UCI bits and the CSI part 2 bits is lower than the priority of the HARQ-ACK bits and is lower than the priority of the CSI part 1 bits. That is, the relationship in Option 4-2C may be as follows:

[legacy CG-UCI bits and HARQ-ACK if any] > [CSI part 1 bits if any] > [new CG-UCI bits and CSI part 2 bits if any]

According to Proposal 4 above, an appropriate rule is applied to the encoding and the rate matching of the single-part new CG-UCI bits, and thus it is possible to appropriately transmit the new CG-UCI bits, that is, to report the dynamic indication of an unused CG PUSCH occasion by CG-UCI.

<Proposal 5>

In Proposal 5, the following two points are assumed:

- The operating frequency band is an unlicensed spectrum or cg-RetransmissionTimer is configured.
- The CG-UCI for an indication of an unused CG PUSCH occasion is two-part CG-UCI.

In the following description, the two-part CG-UCI for the indication of an unused CG PUSCH occasion, that is, the two parts, are referred to as "new CG-UCI part 1 bits" and "new CG-UCI part 2 bits," respectively. Here, in a case of performing rate matching, the "new CG-UCI part 1 bits" has a higher priority than the "new CG-UCI part 2 bits." In Proposal 5, the two parts may be collectively referred to as "new CG-UCI bits." In addition, the number of bits of each of the "new CG-UCI part 1 bits" and the "new CG-UCI part 2 bits" may be one, two or more, or different from each other.

Several methods are herein studied for the presence or absence of multiplexing the new CG-UCI bits and other UCI.

For example, in a case where other UCIs (e.g., HARQ-ACK, CSI, and the like) other than the new CG-UCI bits and the legacy CG-UCI bits are not multiplexed in a CG-PUSCH, the encoding and the rate matching may be performed on the new CG-UCI bits and the legacy CG-UCI bits by any of the following methods of Alts. 1 to 3.

<Alt. 1>

In Alt. 1, the new CG-UCI part 1 bits and the legacy CG-UCI bits may be encoded and rate-matched together as a single coding part. The new CG-UCI part 2 bits may be encoded and rate-matched as another coding part. A priority relationship in the rate matching in this case is, for example, as follows:

$$[\text{new CG-UCI part 1 bits and legacy CG-UCI bits}] > [\text{new CG-UCI part 2 bits}]$$

<Alt. 2>

In Alt. 2, the new CG-UCI part 1 bits may be encoded and rate-matched as a single coding part. The new CG-UCI part 2 bits and the legacy CG-UCI bits may be encoded and rate-matched together as another coding part. A priority relationship in the rate matching in this case may be, for example, any of the following Alts.2A and 2B:

[new CG-UCI part 1 bits] > [new CG-UCI part 2 bits and legacy CG-UCI bits]                    Alt.2A:

[new CG-UCI part 2 bits and legacy CG-UCI bits] > [new CG-UCI part 1 bits]                    Alt.2B:

<Alt. 3>

In Alt. 3, the legacy CG-UCI bits, the new CG-UCI part 1 bits, and the new CG-UCI part 2 bits may be respectively encoded and rate-matched as three coding parts. A priority relationship in the rate matching in this case may be, for example, any of the following Alts. 3A, 3B, and 3C:

Alt.3A:

$$[\text{legacy CG-UCI bits}] > [\text{new CG-UCI part 1 bits}] > [\text{new CG-UCI part 2 bits}]$$

Alt.3B:

$$[\text{new CG-UCI part 1 bits}] > [\text{legacy CG-UCI bits}] > [\text{new CG-UCI part 2 bits}]$$

Alt.3C:

$$[\text{new CG-UCI part 1 bits}] > [\text{new CG-UCI part 2 bits}] > [\text{legacy CG-UCI bits}]$$

For example, in a case where other UCIs (e.g., HARQ-ACK, CSI, and the like) other than the new CG-UCI bits are multiplexed in a CG-PUSCH, several options are studied for the multiplexing of the UCIs in the CG-PUSCH. These options will be then described below. In the following Options 5-1 to 5-7, the legacy CG-UCI bits and the HARQ-ACK bits are encoded together.

<Option 5-1 of Proposal 5>

In Option 5-1, each of the UCIs including the two-part CG-UCI is individually encoded. In Option 5-1, the priority relationship including the priorities of the two-part CG-UCI, that is, the priority of the new CG-UCI part 1 bits and the priority of the new CG-UCI part 2 bits may be any of the following relationships of Options 5-1A to 5-1K.

- Option 5-1A:

[new CG-UCI part 1 bits] > [new CG-UCI part 2 bits] [legacy CG-UCI bits and HARQ-ACK if any] > [CSI part 1 bits if any] > [CSI part 2 bits if any]

- Option 5-1B:

[new CG-UCI part 1 bits] > [legacy CG-UCI bits and HARQ-ACK if any] > [new CG-UCI part 2 bits] > [CSI part 1 bits if any] > [CSI part 2 bits if any]

- Option 5-1C:

[new CG-UCI part 1 bits] > [legacy CG-UCI bits and HARQ-ACK if any] > [CSI part 1 bits if any] > [new CG-UCI part 2 bits] > [CSI part 2 bits if any]

- Option 5-1D:

[new CG-UCI part 1 bits] > [HARQ-ACK and legacy CG-UCI bits] > [CSI part 1 bits if any] > [CSI part 2 bits if any] > [new CG-UCI part 2 bits]

- Option 5-1E:

[legacy CG-UCI bits and HARQ-ACK if any] > [new CG-UCI part 1 bits] > [new CG-UCI part 2 bits] > [CSI part 1 bits if any] > [CSI part 2 bits if any]

- Option 5-1F:

[legacy CG-UCI bits and HARQ-ACK if any] > [new CG-UCI part 1 bits] > [CSI part 1 bits if any] > [new CG-UCI part 2 bits] > [CSI part 2 bits if any]

- Option 5-1G:

[legacy CG-UCI bits and HARQ-ACK if any] > [new CG-UCI part 1 bits] > [CSI part 1 bits if any] > [CSI part 2 bits if any] > [new CG-UCI part 2 bits]

- Option 5-1H:

[legacy CG-UCI bits and HARQ-ACK if any] > [CSI part 1 bits if any] > [new CG-UCI part 1 bits] > [new CG-UCI part 2 bits] > [CSI part 2 bits if any]

- Option 5-1J:

[legacy CG-UCI bits and HARQ-ACK if any] > [CSI part 1 bits if any] > [new CG-UCI part 1 bits] > [CSI part 2 bits if any] > [new CG-UCI part 2 bits]

- Option 5-1K:

[legacy CG-UCI bits and HARQ-ACK if any] > [CSI part 1 bits if any] > [CSI part 2 bits if any] > [new CG-UCI part 1 bits] > [new CG-UCI part 2 bits]

In Option 5-1, the new CG-UCI part 1 bits and the new CG-UCI part 2 bits are all individually encoded, which makes it possible to perform encoding (e.g., setting a size of the offset) suitable for each piece of information.

<Option 5-2 of Proposal 5>

In Option 5-2, the new CG-UCI part 1 bits are encoded together with the HARQ-ACK bits. That is, the rule for the legacy CG-UCI bits is applied to the new CG-UCI part 1 bits. In this case, in Option 5-2, the new CG-UCI part 1 bits, the legacy CG-UCI bits, and the HARQ-ACK bits are encoded together. In Option 5-2, the new CG-UCI part 2 bits are encoded separately from other UCI bits. Note that the priority relationship including the priorities of the two-part CG-UCI in Option 5-2, that is, the priority of the new CG-UCI part 1 bits and the priority of the new CG-UCI part 2 bits may be any of the following relationships of Options 5-2A to 5-2E.

- Option 5-2A:

[legacy CG-UCI bits and new CG-UCI part 1 bits, and HARQ-ACK if any] > [CSI part 1 bits if any] > [CSI part 2 bits if any] > [new CG-UCI part 2 bits]

- Option 5-2B:

[legacy CG-UCI bits and new CG-UCI part 1 bits, and HARQ-ACK if any] > [CSI part 1 bits if any] > [new CG-UCI part 2 bits] > [CSI part 2 bits if any]

- Option 5-2C:

[legacy CG-UCI bits and new CG-UCI part 1 bits, and HARQ-ACK if any] > [new CG-UCI part 2 bits] > [CSI part 1 bits if any] > [CSI part 2 bits if any]

- Option 5-2D:

[legacy CG-UCI bits and new CG-UCI part 1 bits, and HARQ-ACK if any] > [CSI part 1 bits if any] > [new CG-UCI part 2 bits and CSI part 2 bits if any]

- Option 5-2E:

[legacy CG-UCI bits and new CG-UCI part 1 bits, and HARQ-ACK if any] > [new CG-UCI part 2 bits and CSI part 1 bits if any] > [CSI part 2 bits if any]

In Option 5-2, the new CG-UCI part 1 bits are encoded together with the HARQ-ACK bits. Accordingly, the total number of coding parts can be reduced, and the coding part including the new CG-UCI part 1 bits can be transmitted with the same priority as the HARQ-ACK bits, and thus the dynamic indication of an unused CG PUSCH occasion by CG-UCI can be appropriately reported.

<Option 5-3 of Proposal 5>

In Option 5-3, the new CG-UCI part 1 bits are encoded together with the HARQ-ACK bits. That is, the rule for the legacy CG-UCI bits is applied to the new CG-UCI part 1 bits. In this case, in Option 5-2, the new CG-UCI part 1 bits, the legacy CG-UCI bits, and the HARQ-ACK bits are encoded together. In Option 5-3, the new CG-UCI part 2 bits are encoded together with the CSI part 1 bits or the CSI part 2 bits. The priority relationship including the priorities of the two-part CG-UCI in Option 5-3, that is, the priority of the coding part including the new CG-UCI part 1 bits and the priority of the coding part including the new CG-UCI part 2 bits may be any of the following relationships of Options 5-3A and 5-3B.

- Option 5-3A:

[legacy CG-UCI bits and new CG-UCI part 1 bits, and HARQ-ACK if any] > [new CG-UCI part 2 bits and CSI part 1 bits if any] > [CSI part 2 bits if any]

- Option 5-3B:

[legacy CG-UCI bits and new CG-UCI part 1 bits, and HARQ-ACK if any] > [CSI part 1 bits if any] > [new CG-UCI part 2 bits and CSI part 2 bits if any]

In Option 5-3, the new CG-UCI part 1 bits are encoded together with the HARQ-ACK bits, and the new CG-UCI part 2 bits are encoded together with the CSI part 1 bits or the CSI part 2 bits. Accordingly, the total number of coding parts can be further reduced, and the coding part including the new CG-UCI part 1 bits can be transmitted with the same priority as the HARQ-ACK bits, and thus the dynamic indication of an unused CG PUSCH occasion by CG-UCI can be appropriately reported.

<Option 5-4 of Proposal 5>

In Option 5-4, the new CG-UCI part 1 bits are encoded together with the CSI part 1 bits, and the new CG-UCI part 2 bits are encoded separately from other UCI bits. The priority relationship including the priorities of the two-part CG-UCI in Option 5-4, that is, the priority of the coding part including the new CG-UCI part 1 bits and the priority of the coding part including the new CG-UCI part 2 bits may be any of the following relationships of Options 5-4A and 5-4B.

- Option 5-4A:

[legacy CG-UCI bits and HARQ-ACK if any] > [new CG-UCI part 1 bits and CSI part 1 bits if any] > [new CG-UCI part 2 bits] > [CSI part 2 bits if any]

- Option 5-4B:

[legacy CG-UCI bits and HARQ-ACK if any] > [new CG-UCI part 1 bits and CSI part 1 bits if any] > [CSI part 2 bits if any] > [new CG-UCI part 2 bits]

In Option 5-4, the new CG-UCI part 1 bits are encoded together with the CSI part 1 bits. Accordingly, the total number of coding parts can be reduced, and thus the dynamic indication of an unused CG PUSCH occasion by CG-UCI can be appropriately reported.

<Option 5-5 of Proposal 5>

In Option 5-5, the new CG-UCI part 1 bits are encoded together with the CSI part 1 bits, and the new CG-UCI part 2 bits are encoded together with the CSI part 2 bits. The priority relationship including the priorities of the two-part CG-UCI in Option 5-5, that is, the priority of the coding part including the new CG-UCI part 1 bits and the priority of the coding part including the new CG-UCI part 2 bits may be the following relationship:

[legacy CG-UCI bits and HARQ-ACK if any] > [CSI part 1 bits and/or new CG-UCI part 1 bits] > [new CG-UCI part 2 bits and CSI part 2 bits if any]

Note that [CSI part 1 bits and/or new CG-UCI part 1 bits] in Option 5-5 described above may mean [CSI part 1 bits and new CG-UCI part 1 bits] or may mean [CSI part 1 bits or new CG-UCI part 1 bits]. Further, [CSI part 1 bits and new CG-UCI part 1 bits] indicates that the CSI part 1 bits and the new CG-UCI part 1 bits are encoded together. In addition, [CSI part 1 bits or new CG-UCI part 1 bits] indicates that one of the CSI part 1 bits or the new CG-UCI part 1 bits may be encoded and the other may be discarded (or dropped).

In Option 5-5, the new CG-UCI part 1 bits are encoded together with the CSI part 1 bits, and the new CG-UCI part 2 bits are encoded together with the CSI part 2 bits. Accordingly, the total number of coding parts can be further reduced, and thus the dynamic indication of an unused CG PUSCH occasion by CG-UCI can be appropriately reported.

<Option 5-6 of Proposal 5>

In Option 5-6, the new CG-UCI part 1 bits are encoded together with the CSI part 2 bits. In Option 5-6, the new CG-UCI part 2 bits are encoded separately from other UCI bits. The priority relationship including the priorities of the two-part CG-UCI in Option 5-6, that is, the priority of the coding part including the new CG-UCI part 1 bits and the priority of the coding part including the new CG-UCI part 2 bits may be the following relationship:

[legacy CG-UCI bits and HARQ-ACK if any] > [CSI part 1 bits if any] > [new CG-UCI part 1 bits and CSI part 2 bits if any] > [new CG-UCI part 2 bits]

In Option 5-6, the new CG-UCI part 1 bits are encoded together with the CSI part 2 bits. Accordingly, the total number of coding parts can be reduced, and thus the dynamic indication of an unused CG PUSCH occasion by CG-UCI can be appropriately reported.

<Option 5-7 of Proposal 5>

In Option 5-7, the new CG-UCI part 1 bits are encoded separately from other UCI bits. In Option 5-7, the new CG-UCI part 2 bits are encoded together with the HARQ-ACK bits, the CSI part 1 bits, or the CSI part 2 bits. The priority relationship including the priorities of the two-part CG-UCI in Option 5-7, that is, the priority of the coding part including the new CG-UCI part 1 bits and the priority of the coding part including the new CG-UCI part 2 bits may be any of the following relationships.

- Option 5-7A:

[legacy CG-UCI bits and HARQ-ACK if any] > [CSI part 1 bits if any] > [new CG-UCI part 1 bits]> [new CG-UCI part 2 bits and CSI part 2 bits if any]

- Option 5-7B:

[legacy CG-UCI bits and HARQ-ACK if any] > [new CG-UCI part 1 bits]> [new CG-UCI part 2 bits and CSI part 1 bits if any] > [CSI part 2 bits if any]

- Option 5-7C:

[legacy CG-UCI bits and HARQ-ACK if any] > [new CG-UCI part 1 bits]> [CSI part 1 bits if any] > [new CG-UCI part 2 bits and CSI part 2 bits if any]

- Option 5-7D:

[legacy CG-UCI bits and HARQ-ACK if any] > [new CG-UCI part 1 bits]> [new CG-UCI part 2 bits and CSI part 1 bits if any] > [CSI part 2 bits if any]

- Option 5-7E:

[new CG-UCI part 1 bits] > [legacy CG-UCI bits and HARQ-ACK if any] > [CSI part 1 bits if any] > [new CG-UCI part 2 bits and CSI part 2 bits if any]

- Option 5-7F:

[new CG-UCI part 1 bits] > [legacy CG-UCI bits and HARQ-ACK if any] > [new CG-UCI part 2 bits and CSI part 1 bits if any] > [CSI part 2 bits if any]

- Option 5-7G:

[new CG-UCI part 1 bits] > [legacy CG-UCI bits and new CG-UCI part 2 bits, and HARQ-ACK if any] > [CSI part 1 bits if any] > [CSI part 2 bits if any]

In Option 5-7, the new CG-UCI part 1 bits are encoded separately from other UCI bits, and the new CG-UCI part 2 bits are encoded together with the HARQ-ACK bits, the CSI part 1 bits, or the CSI part 2 bits. Accordingly, appropriate encoding (e.g., configuration of the offset) can be performed for the new CG-UCI part 1 bits, and thus the dynamic indication of an unused CG PUSCH occasion by CG-UCI can be appropriately reported.

According to Proposal 5 above, an appropriate rule is applied to the encoding and the rate matching of the two-part new CG-UCI bits, and thus it is possible to appropriately transmit the new CG-UCI bits, that is, to report the dynamic indication of an unused CG PUSCH occasion by CG-UCI.

<Capability>

At least one of the following may be reported from a terminal to a BS as a capability:

- Information for defining whether the terminal supports reporting of a dynamic indication of an unused CG occasion by CG-UCI in a licensed spectrum
- Information for defining whether the terminal supports joint encoding of CG-UCI and HARQ-ACK in a licensed spectrum
- Information for defining whether the terminal supports joint encoding of CG-UCI and CSI part 1 in a licensed spectrum
- Information for defining whether the terminal supports joint encoding of CG-UCI and CSI part 2 in a licensed spectrum
- Information for defining whether the terminal supports reporting of a dynamic indication of an unused CG occasion by CG-UCI in an unlicensed spectrum
- Information for defining whether the terminal supports joint encoding of CG-UCI and HARQ-ACK in an unlicensed spectrum
- Information for defining whether the terminal supports joint encoding of CG-UCI and CSI part 1 in an unlicensed spectrum
- Information for defining whether the terminal supports joint encoding of CG-UCI and CSI part 2 in an unlicensed spectrum

Some of the above-described information may be collectively reported. For example, in a case where the terminal reports, as the capability, that the terminal supports encoding of CG-UCI together with other UCI in a licensed spectrum, the report may include information that the terminal supports encoding of CG-UCI together with HARQ-ACK, that the terminal supports encoding of CG-UCI together with CSI part 1, and that the terminal supports encoding of CG-UCI together with CSI part 2.

In addition, in the above description, the capability of a terminal for a licensed spectrum and the capability of a terminal for an unlicensed spectrum may be brought together. For example, in a case where the terminal reports, as the capability, that the terminal supports joint encoding of CG-UCI and HARQ-ACK, the report may include information that the terminal supports joint encoding of CG-UCI and HARQ-ACK in both a licensed spectrum and an unlicensed spectrum.

Note that, regarding the above-described capabilities, the capabilities of the terminal for a licensed spectrum may be read as the capabilities of the terminal in a case where cg-RetransmissionTimer is not configured. In addition, the capabilities for an unlicensed spectrum may be read as the capabilities of the terminal in a case where cg-RetransmissionTimer is configured.

In each of the above-described Proposals and the Options thereof, the individual encoding (encoding separately) corresponds to performing rate matching also individually (separately).

In the above-described example of the priority relationship in each of the Proposals and the Options thereof, the description of [A and B] may be read as [A and/or B] or [A or B].

In each of the above-described Proposals and the Options thereof, as an exemplary priority relationship, the priority relationship including the new CG-UCI bits and the priority relationship including the new CG-UCI part 1 bits and the new CG-UCI part 2 bits have been described, but for example, a case where the new CG-UCI bits is not present and a case where at least one of the new CG-UCI part 1 bits or the new CG-UCI part 2 bits is not present may be defined. In other words, in the exemplary priority relationship in each of the above-described Proposals and the Options thereof, the description of "new CG-UCI bits" may be replaced with "new CG-UCI bits if any," and the descriptions of "new CG-UCI part 1 bits" and "new CG-UCI part 2 bits" may be replaced with "new CG-UCI part 1 bits if any" and "new CG-UCI part 2 bits if any," respectively.

<Example of Radio Communication System>

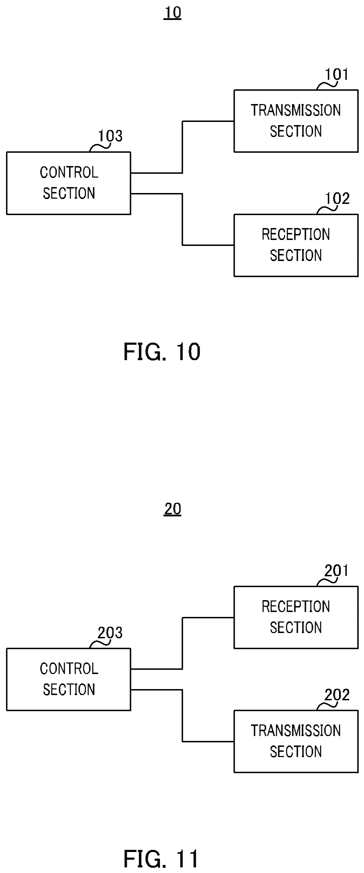

The radio communication system according to the present embodiment includes base station 10 illustrated in FIG. 10 and terminal 20 illustrated in FIG. 11. The number of base stations 10 and the number of terminals 20 are not particularly limited. For example, as illustrated in FIG. 1, a system in which two base stations 10 (base station 10-1 and base station 10-2) communicate with one terminal 20 may be employed. The radio communication system may be a radio communication system conforming to New Radio (NR). For example, the radio communication system may be a radio communication system conforming to a method called URLLC and/or IIoT.

Note that the radio communication system may be a radio communication system conforming to a method called 5G, Beyond 5G, 5G Evolution, or 6G.

Base station 10 may be referred to as an NG-RAN Node, an ng-eNB, an eNodeB (eNB), or a gNodeB (gNB). Terminal 20 may be referred to as user equipment (UE). Base station 10 may be regarded as an apparatus included in a network to which terminal 20 is connected.

The radio communication system may include a Next Generation-Radio Access Network (hereinafter, NG-RAN). The NG-RAN includes a plurality of NG-RAN nodes, specifically, gNBs (or ng-eNBs), and is connected to a core network (5GC, not illustrated) conforming to 5G. Note that the NG-RAN and the 5GC may be simply referred to as a "network."

Base station 10 performs radio communication with terminal 20. For example, the radio communication to be performed conforms to NR. By controlling radio signals transmitted from a plurality of antenna elements, at least one of base station 10 and terminal 20 may support Massive Multiple-Input Multiple-Output (MIMO) that generates a beam (BM) having higher directivity. Further, at least one of base station 10 and terminal 20 may support carrier aggregation (CA) that aggregates and uses a plurality of component carriers (CC). Further, at least one of base station 10 and terminal 20 may support dual connectivity (DC) or the like in which communication is performed between terminal 20 and each of a plurality of base stations 10.

The radio communication system may support a plurality of frequency bands. For example, the radio communication system supports Frequency Range (FR) 1 and FR 2. The frequency bands of the respective FRs are, for example, as follows:

- FR1: 410 MHz to 7.125 GHz

- FR2: 24.25 GHz to 52.6 GHz

In FR 1, a Sub-Carrier Spacing (SCS) of 15 kHz, 30 kHz or 60kHz may be used, and a bandwidth (BW) of 5 MHz to 100 MHz may be used. FR 2 is, for example, a higher frequency than FR 1. In FR 2, an SCS of 60 kHz or 120 kHz may be used and a bandwidth (BW) of 50 MHz to 400 MHz may be used. FR 2 may also include an SCS of 240 kHz.

The radio communication system in the present embodiment may support a higher frequency band than the frequency band of FR 2. For example, the radio communication system in the present embodiment may support a frequency band exceeding 52.6 GHz and up to 114.25 GHz. Such a high frequency band may be referred to as "FR 2x" (e.g., FR 2-1 or FR 2-2).

Further, Cyclic Prefix-Orthogonal Frequency Division Multiplexing (CP-OFDM)/Discrete Fourier Transform-Spread-Orthogonal Frequency Division Multiplexing (DFT-S-OFDM) having a larger sub-carrier spacing (SCS) than that in the example described above may be applied. Further, the DFT-S-OFDM may be applied to both uplink and downlink or may be applied to either one of them.

In the radio communication system, a slot configuration pattern of Time Division Duplex (TDD) may be configured. For example, a pattern indicating the order of two or more slots among a slot for transmitting a downlink (DL) signal, a slot for transmitting an uplink (UL) signal, a slot in which a DL signal, a UL signal, and a guard symbol coexist, and a slot in which a signal to be transmitted is flexibly changed may be specified in the slot configuration pattern.

Further, in the radio communication system, it is possible to perform PUSCH (or Physical Uplink Control Channel (PUCCH)) channel estimation per slot by using a demodulation reference signal (DMRS), and it is further possible to perform PUSCH (or PUCCH) channel estimation by using DMRSs that are respectively assigned to a plurality of slots. Such channel estimation may be referred to as joint channel estimation or may be referred to by another name, such as cross-slot channel estimation.

Terminal 20 may transmit DMRSs respectively assigned to a plurality of slots in the plurality of slots so that base station 10 can perform the joint channel estimation using the DMRSs.

Further, in the radio communication system, an enhanced function may be added to the function of feedback from terminal 20 to base station 10. For example, an enhanced feedback function of the terminal for HARQ-ACKs may be added.

Next, configurations of base station 10 and terminal 20 will be described. Note that, the configurations of base station 10 and terminal 20 described below illustrate exemplary functions related to the present embodiment. Base station 10 and terminal 20 may have functions that are not illustrated. Further, the function classification and/or the name of the functional section are/is not limited as long as the functions serve for executing operations according to the present embodiment.

<Configuration of Base Station>

FIG. 10 is a block diagram illustrating an exemplary configuration of base station 10 according to the present embodiment. Base station 10 includes, for example, transmission section 101, reception section 102, and control section 103. Base station 10 communicates with terminal 20 by radio (see FIG. 11).

Transmission section 101 transmits a downlink (DL) signal to terminal 20. For example, transmission section 101 transmits the DL signal under the control of control section 103.

The DL signal may include, for example, a downlink data signal and control information (e.g., Downlink Control Information (DCI)). Further, the DL signal may include information indicating scheduling related to signal transmission of terminal 20 (e.g., UL grant). Further, the DL signal may include higher layer control information (e.g., Radio Resource Control (RRC) control information). The DL signal may also include a reference signal.

Channels used for DL signal transmission include, for example, data channels and control channels. For example, the data channels may include a Physical Downlink Shared Channel (PDSCH) and the control channels may include a Physical Downlink Control Channel (PDCCH). For example, base station 10 transmits control information to terminal 20 using a PDCCH and transmits a downlink data signal using a PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signals such as the DMRS and the PTRS are used for demodulation of a downlink data signal and are transmitted using a PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

For example, control section 103 acquires information such as data and control information from a higher layer and outputs the information to transmission section 101. Further, control section 103 outputs the data, the control information, and the like received from reception section 102 to a higher layer.

For example, control section 103 allocates a resource (or channel) to be used for DL signal transmission and reception and/or a resource to be used for UL signal transmission and reception, based on the signal (e.g., data, control information, and the like) received from terminal 20 and/or data, control information, and the like acquired from the higher layer. The information on the allocated resource may be included in the control information to be transmitted to terminal 20.

Control section 103 configures a PUCCH resource as an exemplary resource allocation to be used for UL signal transmission and reception. Information on the PUCCH configuration such as a PUCCH cell timing pattern (PUCCH configuration information) may be indicated to terminal 20 by RRC.

For example, base station 10 according to the present embodiment receives uplink control information (UCI) in reception section 102. The received uplink control information may include the dynamic indication of an unused CG PUSCH occasion by CG-UCI.

<Configuration of Terminal>

FIG. 11 is a block diagram illustrating an exemplary configuration of terminal 20. Terminal 20 includes, for example, reception section 201, transmission section 202, and control section 203. Terminal 20 communicates with base station 10 by radio, for example.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on the processing capability of terminal 20 (e.g., UE capability) may also be included. Further, the UL signal may include a reference signal.

Channels used for UL signal transmission include, for example, data channels and control channels. For example, the data channels includes a Physical Uplink Shared Channel (PUSCH) and the control channels includes a Physical Uplink Control Channel (PUCCH). For example, terminal 20 receives control information from base station 10 using a PUCCH and transmits an uplink data signal using a PUSCH.

The reference signal included in the UL signal may include, for example, at least one of a DMRS, a PTRS, a CSI-RS, an SRS, and a PRS. For example, the reference signals such as the DMRS and the PTRS are used for demodulation of an uplink data signal and are transmitted using an uplink channel (e.g., PUSCH).

Control section 203 controls communication operations of terminal 20 including reception processing in reception section 201 and transmission processing in transmission section 202.

For example, control section 203 acquires information such as data and control information from a higher layer and outputs the information to transmission section 202. Further, control section 203 outputs, for example, data and control information received from reception section 201 to a higher layer.

For example, control section 203 controls transmission of information to be fed back to base station 10. The information to be fed back to base station 10 may include, for example, an HARQ-ACK, Channel. State Information (CSI), and/or a Scheduling Request (SR). The information to be fed back to base station 10 may be included in UCI. The UCI is transmitted on a PUCCH resource.

Control section 203 configures a PUCCH resource based on the configuration information received from base station 10 (e.g., configuration information such as a PUCCH cell timing pattern indicated by RRC and/or DCI). Control section 203 determines the PUCCH resource to be used for transmitting the information to be fed back to base station 10. Under the control of control section 203, transmission section 202 transmits the information to be fed back to base station 10 on the PUCCH resource determined by control section 203.

Note that, the channels used for DL signal transmission and the channels used for UL signal transmission are not limited to the examples mentioned above. For example, the channels used for DL signal transmission and the channels used for UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

For example, in terminal 20 according to the present embodiment, control section 203 determines uplink control information based on presence or absence of support for transmission of first information (e.g., new CG-UCI bits or new CG-UCI part 1 bits and new CG-UCI part 2 bits) indicating an unused uplink signal occasion (example of unused CG occasion), the presence or absence of the support being specified according to whether an operating frequency band is a licensed spectrum or whether a specific control parameter (e.g., cg-RetransmissionTimer) is not configured. Transmission section 202 then transmits the uplink control information.

Furthermore, when the first information is indicated by a single first information part (e.g., new CG-UCI bits) in a case where the transmission of the first information is supported, control section 203 determines a coding part by jointly encoding a second information part (e.g., HARQ-ACK, CSI, and the like) indicating second information different from the first information and the single first information part, and determines the uplink control information including the coding part.

Moreover, when the first information is indicated by a plurality of first information parts (e.g., new CG-UCI part 1 bits and new CG-UCI part 2 bits) in a case where the transmission of the first information is supported, control section 203 determines a coding part by jointly encoding a second information part indicating second information different from the first information and at least one of the plurality of first information parts, and determines the uplink control information including the coding part.

In addition, when the first information is indicated by a single or plurality of first information parts in a case where the transmission of the first information is supported, control section 203 determines a coding part by separately encoding a second information part indicating second information different from the first information and the single or plurality of first information parts, and determines the uplink control information including the coding part.

For example, in terminal 20 according to the present embodiment, control unit 203 determines uplink control information based on presence or absence of support for transmission of first information indicating an unused uplink signal occasion, the presence or absence of the support being specified according to whether an operating frequency band is an licensed spectrum or whether a specific control parameter is configured. Transmission section 202 then transmits the uplink control information.

The RRC signaling may be referred to as an RRC message or an RRC information element.

The present disclosure has been described above.

<Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

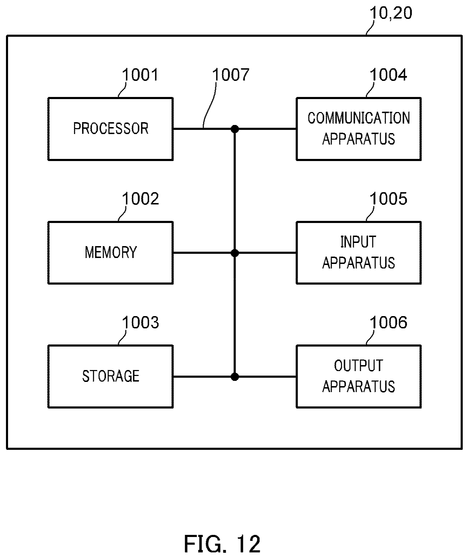

For example, a base station, a terminal, and so on according to one embodiment of the present disclosure may function as a computer that executes the processes of the radio communication method of the present disclosure. FIG. 12 is a diagram to show an example of a hardware structure of a base station and a terminal according to an embodiment of the present disclosure. Physically, the above-described base station 10 and terminal 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and terminal 20 may be configured to include one or more of apparatuses shown in the drawings, or may be configured not to include part of apparatuses.

Each function of base station 10 and terminals 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The division of the items in the above description is not essential to the present disclosure, and matters described in two or more items may be combined and used as necessary, and matters described in one item may be applied to matters described in another item (as long as they do not contradict each other). The boundaries of the functional sections and processing

**EP 4 657 953 A1**

sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, the base station and the terminal have been described using functional block diagrams, but such apparatuses may be implemented in hardware, software, or a combination thereof. Software that operates on a processor included in the base station according to an embodiment of the present disclosure and software that operates on a processor included in the terminal according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

<Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

<Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

<Direction of Input and Output>

The information or signals described in this disclosure may be output from a higher layer (or lower layer) to a lower layer (or higher layer). The information or signals may be input or output through multiple network nodes.

37

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a boolean value (true or false), or by comparison of numerical values (e.g., comparison with a predetermined values).

<Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<System and Network>

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

<Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, the terminal may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, the base station may have the functions of the terminal described above.

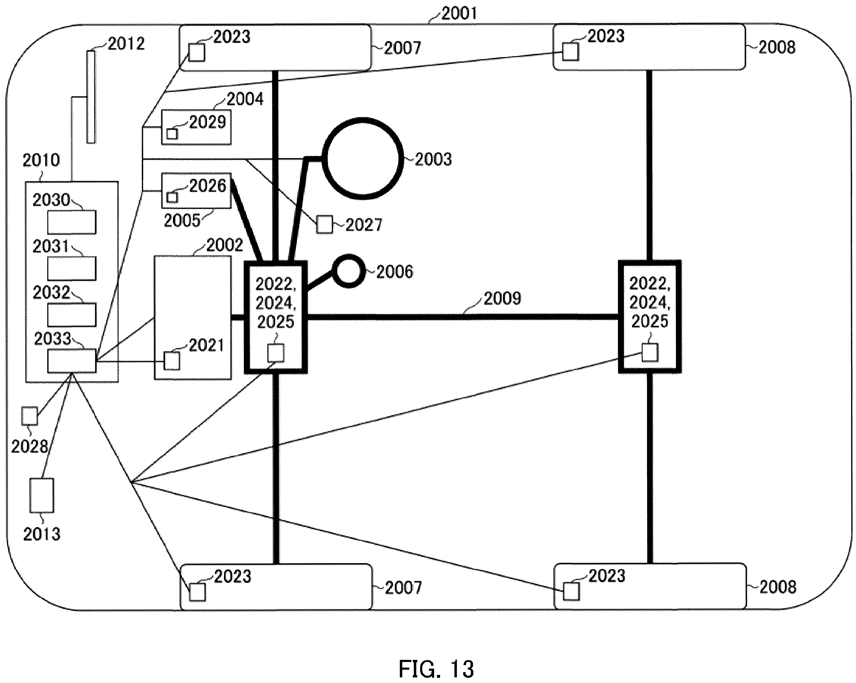

FIG. 13 shows an example of a configuration of vehicle 2001. As shown in FIG. 13, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, and sensors 2021 to 2029 mounted in vehicle 2001.

<Meaning and Interpretation of Terms>

As used herein, the term "determining" may encompasses a wide variety of actions. For example, "determining" may be regarded as judging, calculating, computing, processing, deriving, investigating, looking up or search inquiry (e.g.,

looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot" and so on, depending on which standard applies.

<Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

<"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts," "circuits," "devices," etc.

<Open Form>

In the case where the terms "include," "including" and variations thereof are used in the present disclosure, these terms are intended to be comprehensive in the same way as the term "comprising." Further, the term "or" used in the present specification is not intended to be an "exclusive or."

<Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a," "an," and "the," the disclosure may include that the noun following these articles is plural.

<"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Industrial Applicability

An aspect of the present disclosure is useful for radio communication systems.

Reference Signs List

    10 Base station
    20 Terminal
    101, 202 Transmission section
    102, 201 Reception section
    103, 203 Control section

**Claims**

1. A terminal, comprising:

    a control section that determines uplink control information based on presence or absence of support for transmission of first information indicating an unused uplink signal occasion, the presence or absence of the support being specified according to whether an operating frequency band is a licensed spectrum or whether a specific control parameter is not configured; and
    a transmission section that transmits the uplink control information.

2. The terminal according to claim 1, wherein
    the control section determines, when the first information is indicated by a single first information part in a case where the transmission of the first information is supported, a coding part by jointly encoding a second information part indicating second information different from the first information and the single first information part, and determines the uplink control information including the coding part.

3. The terminal according to claim 1, wherein
    the control section determines, when the first information is indicated by a plurality of first information parts in a case where the transmission of the first information is supported, a coding part by jointly encoding a second information part indicating second information different from the first information and at least one of the plurality of first information parts, and determines the uplink control information including the coding part.

4. The terminal according to claim 1, wherein
    the control section determines, when the first information is indicated by a single or plurality of first information parts in a case where the transmission of the first information is supported, a coding part by separately encoding a second information part indicating second information different from the first information and the single or plurality of first information parts, and determines the uplink control information including the coding part.

5. A radio communication method, comprising:

determining, by a terminal, uplink control information based on presence or absence of support for transmission of first information indicating an unused uplink signal occasion, the presence or absence of the support being specified according to whether an operating frequency band is a licensed spectrum or whether a specific control parameter is not configured; and
transmitting, by the terminal, the uplink control information.

6. A radio communication system, comprising:

a terminal including:

a control section that determines uplink control information based on presence or absence of support for transmission of first information indicating an unused uplink signal occasion, the presence or absence of the support being specified according to whether an operating frequency band is a licensed spectrum or whether a specific control parameter is not configured; and
a transmission section that transmits the uplink control information; and

a base station including a reception section that receives the uplink control information.

FIG. 1

EP 4 657 953 A1

FIG. 2

FIG. 3

HARQ-ACK codebook

PUCCH or PUSCH on a slot

UL grant
UL DAI = 1

DL association set

(3,3)

(0,0) (2,2) (1,1)

(3,0) (1,2) (0,1)

(2,0)

(1,0)

(C-DAI, T-DAI)

CC

Slot

FIG. 4

**Example**: configured K1 set $C(K_1) = \{1,2,3,4\}$, assuming $\mu_{DL} = \mu_{UL}$

Serving
cell c

| n | n+1 | n+2 | n+3 | n+4 |
|---|-----|-----|-----|-----|

K1=4    K1=3    K1=2    K1=1

PUCCH
cell

| n | n+1 | n+2 | n+3 | n+4 |
|---|-----|-----|-----|-----|

FIG. 5

**Example**: configured K1 set $C(K_1) = \{1,2,3,4,5\}$, assuming $\mu_{DL} > \mu_{UL}$

Serving
cell c

| 2n | 2n+1 | 2n+2 | 2n+3 | 2n+4 | 2n+5 | 2n+6 | 2n+7 | 2n+8 | 2n+9 | 2n+10 | 2n+11 |
|----|------|------|------|------|------|------|------|------|------|-------|-------|
| K1=5 | K1=5 | K1=4 | K1=4 | K1=3 | K1=3 | K1=2 | K1=2 | K1=1 | K1=1 | | |

PUCCH
cell

| n | n+1 | n+2 | n+3 | n+4 | n+5 |
|---|-----|-----|-----|-----|-----|

FIG. 6

$M_{A,c}$ for sercing cell c :

| Candidate PDSCH reception occasions in **DL slot(s) for $K_{1,1}$** (e.g. slot $n_{D,1}$) | ...... | Candidate PDSCH reception occasions in **DL slot(s) for $K_{1,k}$** (e.g. slot $n_{D,k}$) | ...... |

FIG. 7

EP 4 657 953 A1

| Row index (RI) | K0 | Start | Length | Mapping Type |
|----------------|-----|-------|--------|--------------|
| 0 | 0 | #2 | 4 | B |
| 1 | 0 | #6 | 4 | B |
| 2 | 0 | #10 | 4 | B |
| 3 | 0 | #0 | 13 | A |
| 4 | 0 | #4 | 2 | B |
| 5 | 0 | #6 | 2 | B |
| 6 | 0 | #8 | 2 | B |
| 7 | 0 | #10 | 2 | B |
| 8 | 0 | #12 | 2 | B |

RI0    RI1    RI2

RI 3

RI4    RI5    RI6    RI7    RI8

UL

Slot format

Exclude SLIVs due to conflict with semi-static UL symbol

TDRA pruning according to predefined rule

Candidate PDSCH reception occasions in slot n+2: $M_{A,c}$ = {0,1,2,3}

FIG. 8

*cg-nrof*
*PUSCH-In Slot* = 2

*cg-nrof Slots* = 3

FIG. 9

10

```
                                    ┌─────────────────┐ 101
                                    │  TRANSMISSION   │
                                    │     SECTION     │
                                    └─────────────────┘
        ┌─────────────┐ 103
        │   CONTROL   │
        │   SECTION   │
        └─────────────┘             ┌─────────────────┐ 102
                                    │    RECEPTION    │
                                    │     SECTION     │
                                    └─────────────────┘
```

# FIG. 10

20

```
                                    ┌─────────────────┐ 201
                                    │    RECEPTION    │
                                    │     SECTION     │
                                    └─────────────────┘
        ┌─────────────┐ 203
        │   CONTROL   │
        │   SECTION   │
        └─────────────┘             ┌─────────────────┐ 202
                                    │  TRANSMISSION   │
                                    │     SECTION     │
                                    └─────────────────┘
```

# FIG. 11

10,20

1001      1007      1004

PROCESSOR

COMMUNICATION APPARATUS

1002                 1005

MEMORY

INPUT APPARATUS

1003                 1006

STORAGE

OUTPUT APPARATUS

FIG. 12

FIG. 13

## INTERNATIONAL SEARCH REPORT

| International application No. |
| --- |
| **PCT/JP2023/002536** |

| A. | CLASSIFICATION OF SUBJECT MATTER |
| --- | --- |

*H04W 72/21*(2023.01)i; *H04W 72/54*(2023.01)i
FI: H04W72/21; H04W72/54 110

According to International Patent Classification (IPC) or to both national classification and IPC

| B. | FIELDS SEARCHED |
| --- | --- |

Minimum documentation searched (classification system followed by classification symbols)

H04W72/21; H04W72/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020/239197 A1 (FRAUNHOFER-GESELLSCHAFT ZUR FOERDERUNG DER ANGEWANDTEN FORSCHUNG E.V.) 03 December 2020 (2020-12-03) abstract, claims 1, 4, 5, 9, 10, 37, page 1, lines 11-18, page 6, line 33 to page 7, line 6, page 24, line 29 to page 26, line 10, page 31, line 33 to page 32, line 2, fig. 1, 2, 5 | 1-3, 5, 6 |
| Y | | 4 |
| Y | SONY. UL Scheduling enhancement for XR traffic and evaluation results [online]. 3GPP TSG RAN WG2 #120 R2-2211928, 18 November 2022, pages 1-5 page 2, lines 15-11 from the bottom | 4 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 August 2023** | **29 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/002536**

| Patent document cited in search report | Publication date (day/month/year) | Patent family member(s) | Publication date (day/month/year) |
|---|---|---|---|
| WO 2020/239197 A1 | 03 December 2020 | (Family: none) | |

Form PCT/ISA/210 (patent family annex) (January 2015)